(19) Europäisches Patentamt
European Patent Office
Office européen des brevets

(11) EP 4 435 041 A1

(12) # EUROPEAN PATENT APPLICATION
published in accordance with Art. 153(4) EPC

(43) Date of publication:
**25.09.2024 Bulletin 2024/39**

(21) Application number: **22895592.8**

(22) Date of filing: **15.11.2022**

(51) International Patent Classification (IPC):
***C08J 9/18*** *(2006.01)*

(52) Cooperative Patent Classification (CPC):
**C08J 9/18**

(86) International application number:
**PCT/JP2022/042353**

(87) International publication number:
**WO 2023/090311 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2021 JP 2021186536**

(71) Applicant: **Kaneka Corporation**
**Osaka-shi, Osaka 530-8288 (JP)**

(72) Inventor: **FUKUZAWA, Jun**
**Settsu-shi, Osaka 566-0072 (JP)**

(74) Representative: **Hoffmann Eitle**
**Patent- und Rechtsanwälte PartmbB**
**Arabellastraße 30**
**81925 München (DE)**

(54) **POLYPROPYLENE FOAM PARTICLES AND POLYPROPYLENE FOAM MOLDED BODY, AND METHODS FOR PRODUCING SAME**

(57) An object is to provide polypropylene-based expanded particles that can give an in-mold expanded product having excellent surface appearance and productivity. The object is attained by polypropylene-based expanded particles having a moisture content of 1.0% to 60.0% after drying with a dryer and/or at the time of molding.



Processed by Luminess, 75001 PARIS (FR)

## Description

### Technical Field

The present invention relates to polypropylene-based expanded particles, a polypropylene-based in-mold expanded product, and methods for producing the polypropylene-based expanded particles and the polypropylene-based in-mold expanded product.

### Background Art

Molded products (in-mold expanded products) formed by molding polypropylene-based expanded particles have conventionally been widely used as interior materials and shock-absorbing materials of automobiles. Recently, there has been an increase in demand for the application of polypropylene-based in-mold expanded products to peripheral members for electric components that increase in accordance with a shift toward electric vehicles.

For example, Patent Literature 1 discloses a technique in which, in in-mold molding of polypropylene-based expanded particles, polypropylene-based expanded particles before molding are impregnated with air, and the polypropylene-based expanded particles having an increased internal pressure are molded, and thus a polypropylene-based in-mold expanded product is obtained.

### Citation List

[Patent Literature]

[Patent Literature 1]
International Publication No. WO2017/169260

### Summary of Invention

### Technical Problem

However, the conventional technique as described above needs to impart a high internal pressure to expanded particles, and there is room for further improvement from the viewpoint of productivity of an in-mold expanded product.

In view of the above circumstances, an object of an embodiment of the present invention is to provide polypropylene-based expanded particles that can give a polypropylene-based in-mold expanded product having excellent surface appearance and productivity.

### Solution to Problem

As a result of diligent research in order to attain the object, the inventors of the present invention have completed the present invention.

That is, an embodiment of the present invention includes polypropylene-based expanded particles having a moisture content of 1.0% to 60.0%.

### Advantageous Effects of Invention

An embodiment of the present invention brings about an effect of being able to provide polypropylene-based expanded particles that can give a polypropylene-based in-mold expanded product having excellent surface appearance and productivity.

### Description of Embodiments

The following description will discuss embodiments of the present invention. The present invention is not, however, limited to those embodiments. The present invention is not limited to arrangements described below, but may be altered in various ways by a skilled person within the scope of the claims. The present invention also encompasses, in its technical scope, any embodiment or example derived by combining technical means disclosed in respective differing embodiments and examples. Further, it is possible to form a new technical feature by combining the technical means disclosed in the respective embodiments. All academic and patent documents cited in the present specification are incorporated herein by reference. Any numerical range expressed as "A to B" in the present specification means "not

less than A and not more than B (i.e., a range from A to B which includes both A and B)" unless otherwise stated.

Furthermore, in the present specification, a copolymer containing, as structural units, a structural unit derived from monomer $X^1$, a structural unit derived from monomer $X^2$, ..., and a structural unit derived from monomer $X^n$ (where n is an integer of 2 or more) may be referred to as "$X^1/X^2/.../X^n$ copolymer", unless otherwise stated. The $X^1/X^2/.../X^n$ copolymer is not limited to any particular polymerization form unless otherwise explicitly stated, and may be a random copolymer, a block copolymer, an alternating copolymer, or a graft copolymer.

In the present specification, a structural unit derived from an X monomer contained in a polymer or a copolymer may be referred to as "X unit".

[1. Technical idea of embodiment of present invention]

In particular, in a case where a polypropylene-based in-mold expanded product is applied as a member (such as an interior material) which is exposed to view, the in-mold expanded product is demanded to have an excellent appearance (surface appearance). In a technique in which polypropylene-based expanded particles are impregnated with an inorganic gas (such as air) to improve surface appearance of a resulting polypropylene-based in-mold expanded product, it is necessary to impart an internal pressure (internal-expanded particle pressure) that is high to some extent to the polypropylene-based expanded particles before molding. As the necessary internal pressure becomes higher, an impregnation time with the inorganic gas becomes longer accordingly. As the impregnation time becomes longer, a time taken to produce a polypropylene-based in-mold expanded product increases. As a result, there is a problem that productivity (production efficiency) of a polypropylene-based in-mold expanded product is deteriorated.

Under the circumstances, the inventors of the present invention have considered that productivity of a polypropylene-based in-mold expanded product can be improved if it would be possible to provide polypropylene-based expanded particles as follows. That is, polypropylene-based expanded particles that can give a polypropylene-based in-mold expanded product having excellent surface appearance with a short impregnation time (necessary internal-expanded particle pressure is low) of an inorganic gas into the polypropylene-based expanded particles or without impregnation with an inorganic gas (without imparting an internal pressure).

As a result of diligent research on the basis of such an idea, the inventors of the present invention have made the following findings and accomplished the present invention. That is, by molding polypropylene-based expanded particles having a specific moisture content, it is possible to provide a polypropylene-based in-mold expanded product having excellent surface appearance, even if an imparted internal-expanded particle pressure is low or no internal-expanded particle pressure is imparted. In other words, by molding polypropylene-based expanded particles having a specific moisture content, it is possible to provide, with higher productivity, a polypropylene-based in-mold expanded product having excellent surface appearance even if an imparted internal-expanded particle pressure is low or no internal-expanded particle pressure is imparted.

In a case where, in conventional production of a polypropylene-based in-mold expanded product, polypropylene-based expanded particles to be subjected to molding contain water, there has been a problem as follows. Even if a bulk density of polypropylene-based expanded particles in a state of containing water is used as an index, variance in moisture content between the expanded particles causes variance in molded product density after drying of a resulting polypropylene-based in-mold expanded product.

In contrast, in a case where polypropylene-based expanded particles to be subjected to molding do not contain water, there is a certain relationship between the bulk density of polypropylene-based expanded particles to be subjected to molding and the molded product density of a polypropylene-based in-mold expanded product after drying with a dryer. Therefore, in a case where the polypropylene-based expanded particles to be subjected to molding do not contain water or a moisture content thereof is very low, it is possible to stably produce a polypropylene-based in-mold expanded product having no variance in molded product density. For this reason, in the conventional production of a polypropylene-based in-mold expanded product, molding was carried out in a state in which a moisture content of polypropylene-based expanded particles was reduced as much as possible in order to suppress variance in molded product density of the polypropylene-based in-mold expanded product. Here, in order to reduce the moisture content of the polypropylene-based expanded particles as much as possible, for example, the polypropylene-based expanded particles to be subjected to molding were dried with a dryer. That is, the moisture content (at the time of molding) of the polypropylene-based expanded particles after drying with a dryer (i.e., polypropylene-based expanded particles at the time of molding) in the conventional production of a polypropylene-based in-mold expanded product was very low (e.g., less than 1%). Under the circumstances, the following novel finding made by the inventors of the present invention can be said to be a surprising finding that cannot be expected from the conventional technique. That is, by purposely controlling a moisture content of polypropylene-based expanded particles after drying with a dryer (at the time of molding) to fall within a specific range which is relatively high, it is possible to provide a molded product having excellent surface appearance and excellent productivity.

[2. Polypropylene-based expanded particles]

Polypropylene-based expanded particles in accordance with an embodiment of the present invention has a moisture content of 1.0% to 60.0% after drying with a dryer and/or at the time of molding.

The present expanded particles have the above feature, and therefore bring about an advantage of being able to provide, with good productivity, a polypropylene-based in-mold expanded product having excellent surface appearance.

By molding the polypropylene-based expanded particles in accordance with an embodiment of the present invention by a known method, it is possible to provide a polypropylene-based in-mold expanded product.

In the present specification, the "polypropylene-based expanded particles" may be referred to as "expanded particles", the "polypropylene-based expanded particles in accordance with an embodiment of the present invention" may be referred to as "present expanded particles", and the "polypropylene-based resin in-mold expanded product" may be referred to as "in-mold expanded product". The "moisture content after drying with a dryer and/or at the time of molding" of the expanded particles may be simply referred to as "moisture content".

The following description will discuss possible components of the present expanded particles.

<Polypropylene-based resin (A)>

The present expanded particles preferably contain a polypropylene-based resin (A). In the present specification, the polypropylene-based resin (A) is intended to mean a resin which contains structural units derived from a propylene monomer in a proportion of at least not less than 50 mol%, preferably not less than 75%, with respect to 100 mol% of all structural units contained in the resin. In the present specification, the "structural units derived from a propylene monomer" may be referred to as "propylene units".

The polypropylene-based resin (A) may be (a) a homopolymer of propylene, (b) a block copolymer, an alternating copolymer, a random copolymer, or a graft copolymer each of which is a copolymer of propylene and a monomer other than propylene, or (c) a mixture of at least two thereof.

In addition to the propylene units, the polypropylene-based resin (A) may have one or more units of structural units derived from a monomer(s) other than a propylene monomer or may have one or more types of structural units derived from monomers other than a propylene monomer. A "monomer(s) other than a propylene monomer" used in the production of the polypropylene-based resin (A) may be referred to as a "comonomer(s)". The "structural unit(s) derived from a monomer(s) other than a propylene monomer" contained in the polypropylene-based resin may be referred to as a "comonomer unit(s)".

Examples of such a comonomer(s) include $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

Specific examples of the polypropylene-based resin (A) include polypropylene homopolymers, ethylene/propylene random copolymers, 1-butene/propylene random copolymers, 1-butene/ethylene/propylene random copolymers, ethylene/propylene block copolymers, 1-butene/propylene block copolymers, propylene/chlorinated vinyl copolymers, propylene/maleic anhydride copolymers, and styrene-modified polypropylene-based resins. As the polypropylene-based resin (A), one of these can be used alone or two or more of these can be used in combination. Among these, ethylene/propylene random copolymers and 1-butene/ethylene/propylene random copolymers are suitable in that those copolymers provide good expansion property to expanded particles obtained therefrom, and favorable moldability to a molded product formed by molding the obtained expanded particles. Note that "1-butene" above is synonymous with "butene-1".

A case in which an ethylene/propylene random copolymer is used as the polypropylene-based resin (A) (hereinafter "Case A") will be considered. In Case A, an ethylene content of the ethylene/propylene random copolymer is preferably 0.2% by weight to 15.0% by weight, more preferably 0.5% by weight to 10.0% by weight, and further preferably 0.5% by weight to 4.0% by weight, with respect to 100% by weight of the copolymer. The ethylene content of the copolymer is intended to mean an amount (% by weight) of a structural unit (ethylene unit) derived from ethylene contained in 100% by weight as a total amount of all structural units constituting the copolymer. (i) In a case where the amount of the ethylene unit contained in the ethylene/propylene random copolymer is not less than 0.2% by weight, there is a tendency that good expansion property of resin particles is achieved during production of the present expanded particles and/or good moldability of resulting expanded particles is achieved. (ii) In a case where the amount of the ethylene unit contained in the ethylene/propylene random copolymer is not more than 15.0% by weight, there is no risk that mechanical properties of an in-mold expanded product which is obtained by molding the present expanded particles deteriorate.

A case in which a 1-butene/ethylene/propylene random copolymer is used as the polypropylene-based resin (A) (hereinafter "Case B") will be considered. An ethylene content of the 1-butene/ethylene/propylene random copolymer is preferably 0.1% by weight to 10.0% by weight, more preferably 0.2% by weight to 5.0% by weight, and further preferably

0.5% by weight to 1.0% by weight, with respect to 100% by weight of the copolymer. (i) In a case where the amount of the ethylene unit contained in the 1-butene/ethylene/propylene random copolymer is not less than 0.1% by weight, there is a tendency that good expansion property of expanded particles is achieved during production of the present expanded particles and/or good moldability of resulting expanded particles is achieved. (ii) In a case where the amount of the ethylene unit contained in the 1-butene/ethylene/propylene random copolymer is not more than 10.0% by weight, there is no risk that mechanical properties of an in-mold expanded product which is obtained from the present expanded particles deteriorate.

In Case B, a 1-butene content of the 1-butene/ethylene/propylene random copolymer is preferably 0.2% by weight to 15.0% by weight, more preferably 1.0% by weight to 10.0% by weight, and further preferably 2.0% by weight to 7.0% by weight, with respect to 100% by weight of the copolymer. The 1-butene content of the copolymer is intended to mean an amount (% by weight) of a structural unit (1-butene unit) derived from 1-butene contained in 100% by weight as a total amount of all structural units constituting the copolymer. (i) In a case where the amount of the 1-butene unit contained in the 1-butene/ethylene/propylene random copolymer is not less than 0.2% by weight, there is a tendency that good expansion property of expanded particles is achieved during production of the present expanded particles and/or good moldability of resulting expanded particles is achieved. (ii) In a case where the amount of the 1-butene unit contained in the 1-butene/ethylene/propylene random copolymer is not more than 15.0% by weight, there is no risk that mechanical properties of an in-mold expanded product which is obtained by molding the present expanded particles deteriorate.

In Case B, a total amount of the ethylene unit and the 1-butene unit contained in the 1-butene/ethylene/propylene random copolymer is preferably 0.5% by weight to 15.0% by weight, more preferably 0.5% by weight to 10.0% by weight, and further preferably 2.0% by weight to 6.0% by weight, with respect to 100% by weight of the 1-butene/ethylene/propylene random copolymer. (i) In a case where the total amount of the ethylene unit and the 1-butene unit contained in the 1-butene/ethylene/propylene random copolymer is not less than 0.5% by weight, there is a tendency that good expansion property of expanded particles is achieved during production of the present expanded particles and/or good moldability of resulting expanded particles is achieved. (ii) In a case where the total amount of the ethylene unit and the 1-butene unit contained in the 1-butene/ethylene/propylene random copolymer is not more than 10.0% by weight, there is no risk that mechanical properties of an in-mold expanded product which is obtained from the present expanded particles deteriorate.

A melting point of the polypropylene-based resin (A) is preferably 125.0°C to 160.0°C, more preferably 130.0°C to 158.0°C, more preferably 135.0°C to 152.0°C, more preferably 138.0°C to 149.0°C, further preferably 139.0°C to 146.0°C, and particularly preferably 141.0°C to 145.0°C. (i) In a case where the melting point of the polypropylene-based resin (A) is not less than 125.0°C, it is possible to obtain an in-mold expanded product having excellent dimensional stability at a high temperature. (ii) In a case where the melting point of the polypropylene-based resin (A) is not more than 160.0°C, an in-mold expanded product can be obtained by in-mold expansion molding at a low steam pressure.

In the present specification, the melting point of the polypropylene-based resin is a value measured and obtained by a differential scanning calorimetry (hereinafter referred to as "DSC method"). A specific operation procedure is as follows: (1) a temperature of 5 mg to 6 mg of a polypropylene-based resin is increased from 40.0°C to 220.0°C at a temperature increase rate of 10.0°C/min so that the polypropylene-based resin is melted; (2) after that, the temperature of the melted polypropylene-based resin is decreased from 220.0°C to 40.0°C at a temperature decrease rate of 10.0°C/min so that the polypropylene-based resin is crystallized; and (3) then, the temperature of the crystallized polypropylene-based resin is increased from 40.0°C to 220.0°C at a temperature increase rate of 10°C/min. It is possible to determine, as the melting point of the polypropylene-based resin, a temperature at a peak (melting peak) in a DSC curve of the polypropylene-based resin which DSC curve is obtained in the second temperature increase (i.e., in the step (3) above). Note that, in a case where a plurality of peaks (melting peaks) are present in the DSC curve of the polypropylene-based resin obtained during the second temperature increase by the above-described method, a temperature at a peak (melting peak) having the greatest melting heat quantity is defined as the melting point of the polypropylene-based resin. As a differential scanning calorimeter, for example, a differential scanning calorimeter of a DSC6200 type manufactured by Seiko Instruments Inc. can be used.

A melt index (MI) of the polypropylene-based resin (A) is not particularly limited, and is preferably 3.00 g/10 minutes to 30.00 g/10 minutes, more preferably 4.00 g/10 minutes to 20.00 g/10 minutes, further preferably 5.00 g/10 minutes to 15.00 g/ 10 minutes, and particularly preferably 6.00 g/ 10 minutes to 13.00 g/ 10 minutes. MI may be referred to as "melt flow rate (MFR)".

In a case where the MI of the polypropylene-based resin is not less than 3.00 g/10 minutes, flowability of the polypropylene-based resin at the time of expansion is good and expansion is easy. In a case where the MI of the polypropylene-based resin is not more than 30.00 g/10 minutes, the polypropylene-based resin has adequate flowability. Therefore, it is possible to obtain expanded particles having a high expansion rate. In particular, in a case where the MI of the polypropylene-based resin (A) is 3.00 g/10 minutes to 8.00 g/10 minutes, it is possible to efficiently produce expanded particles which can suitably provide an in-mold expanded product having a relatively high density.

In the present specification, the MI of the polypropylene-based resin is a value measured and obtained with use of an MI measurement device described in JIS K7210:1999 under the following conditions: a diameter φ of an orifice is 2.0959±0.005 mm; a length of the orifice is 8.000±0.025 mm; a load is 2.16 kgf; and a temperature is 230°C (230±0.2°C). Note that, in a case where the polypropylene-based resin (A) is a mixture of a plurality of types of copolymers, the MI of the polypropylene-based resin (A) is intended to mean a melting point of the mixture.

The present expanded particles contain the polypropylene-based resin (A) in an amount of preferably not less than 70.0% by weight, more preferably not less than 75.0% by weight, more preferably not less than 77.0% by weight, and further preferably not less than 79.0% by weight, with respect to 100% by weight as a total amount of the expanded particles. (i) In a case where the expanded particles contain the polypropylene-based resin (A) in an amount of not less than 70.0% by weight, it is possible to obtain an in-mold expanded product having no sink marks and having excellent strength (e.g., compressive strength). An upper limit of the amount of the polypropylene-based resin (A) contained in the present expanded particles is not particularly limited, and can be, for example, not more than 99.0% by weight, preferably 90.0% by weight, and more preferably not more than 80.0% by weight, with respect to 100% by weight as a total amount of the expanded particles.

The polypropylene-based resin (A) can be obtained by a known method. A polymerization catalyst to be used in synthesizing the polypropylene-based resin (A) is not limited to any particular one. Possible examples of the polymerization catalyst include a Ziegler catalyst and a metallocene catalyst.

<Hydrophilic substance (B)>

The present expanded particles preferably contain a hydrophilic substance (B). In a case where the present expanded particles contain a hydrophilic substance, it is possible to increase the moisture content of the expanded particles and to stably obtain expanded particles having an intended moisture content (e.g., 1.0% to 60.0%). That is, it is possible to bring about an advantage of stably providing expanded particles that can give an in-mold expanded product having excellent surface appearance and productivity.

The present expanded particles contain the hydrophilic substance (B) in an amount of preferably more than 0.1% by weight and not more than 20.0% by weight, more preferably 1.0% by weight to 19.0% by weight, more preferably 5.0% by weight to 19.0% by weight, further preferably 10.0% by weight to 18.0% by weight, still further preferably more than 10.0% by weight and not more than 18.0% by weight, and particularly preferably 13.0% by weight to 17.0% by weight, with respect to 100% by weight as a total amount of the polypropylene-based expanded particles. (i) In a case where the expanded particles contain the hydrophilic substance (B) in an amount of more than 0.1% by weight, it is possible to stably obtain expanded particles having an intended moisture content and, in addition, it is possible to provide an in-mold expanded product having excellent flame retardancy. (ii) In a case where the expanded particles contain the hydrophilic substance (B) in an amount of not more than 20.0% by weight, it is possible to obtain an in-mold expanded product having no sink marks and having excellent strength (e.g., compressive strength).

In the present specification, the hydrophilic substance is intended to mean a compound that has a polarity in a molecule, and a compound that improves a moisture content of resulting expanded particles in the expansion step (described later). Examples of the hydrophilic substance (B) in accordance with an embodiment of the present invention include: phosphonates such as cyclic phosphonate and cyclic bisphosphonate; intumescent-based flame retardants such as ammonium polyphosphate and melamine polyphosphate; C12 to C18 aliphatic alcohols such as glycerin, diglycerine, polyethylene glycol, pentaerythritol, cetyl alcohol, and stearyl alcohol; melamine; isocyanuric acid; melamine-isocyanuric acid condensate; zinc borate; aluminum hypophosphite; and the like. Among these, phosphonates are preferable, and cyclic bisphosphonate is more preferable, because those substances can provide an in-mold expanded product having excellent flame retardancy. One type of these hydrophilic substances (B) can be used alone, or two or more types of these can be used in combination.

(Phosphonate)

Phosphonates are intended to mean: esters and partial esters containing $M\text{-}PO(OH)_2$ and/or $M\text{-}PO(OM^1)_2$ groups (where M is a monovalent hydrocarbon group (e.g., methyl group, benzyl group, aryl group, alkynyl group, allenyl group, vinyl group or substituted vinyl group), and $M^1$ is a hydrocarbyl group (e.g., alkyl group or aryl group); and salts thereof.

Examples of the phosphonates include: alkyl phosphonic acids, aryl phosphonic acids, and esters thereof; mono-phosphonates; acyclic bisphosphonates; and cyclic phosphonates. Among these phosphonates, cyclic phosphonates are preferable, and cyclic bisphosphonates are particularly preferable.

Examples of cyclic phosphonates include compounds represented by the following structural formula (i):

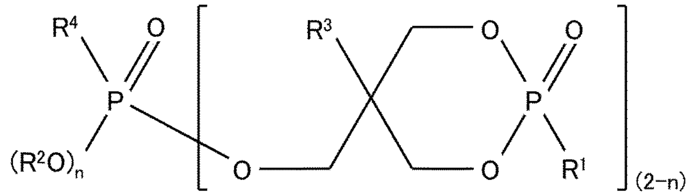

···(i)

where $R^1$ and $R^2$ are independently a $C_{1}$-$_{4}$ alkyl group, $R^3$ is H or a $C_{1}$-$_{4}$ alkyl group, $R^4$ is a $C_{9}$-$_{22}$ alkyl group, a $C_{9}$-$_{22}$ cycloalkyl group, a $C_{9}$-$_{22}$ aryl group or a $C_{9}$-$_{22}$ aralkyl group, and n is 0 or 1.

More specifically, the cyclic phosphonate represented by the structural formula (i) above is disclosed in the specification of French Patent Application Publication No. 1503429.

Examples of cyclic phosphonates include compounds represented by the following structural formula (ii):

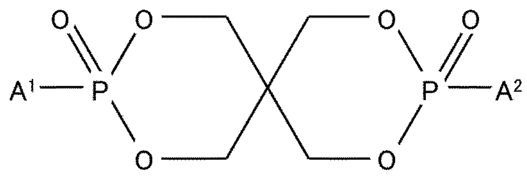

···(ii)

where $A^1$ and $A^2$ are independently a $C_{1}$-$_{10}$ alkyl group, a $C_{2}$-$_{10}$ alkenyl group, a benzyl group, a phenylethyl group, a phenyl group or a naphthyl group.

The cyclic bisphosphonates are disclosed in more detail in the specification of US Patent No. 4174343 and the specification of UK Patent Application Publication No. 1515223.

Among the cyclic bisphosphonates, pentaerythrityl diphosphonate (e.g., AFLAMMIT (registered trademark) PCO 900 (phosphorus content: 24%) manufactured by Thor GmbH), which is represented by the following structural formula (iii), is particularly preferable because the pentaerythrityl diphosphonate makes it possible to obtain an in-mold expanded product having excellent dimensional stability under heating. The pentaerythrityl diphosphonate is, specifically, particularly preferably 3,9-dimethyl-2,4,8, 10-tetraoxa-3,9-diphosphaspiro[5,5]undecane-3,9-dioxide.

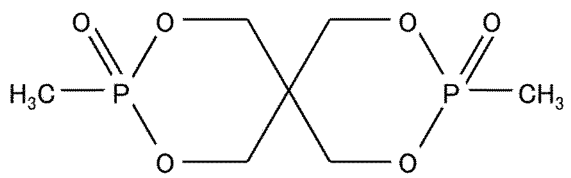

···(iii)

As other cyclic phosphoric esters, the compound disclosed in the specification of French Patent Application Publication No. 1503429 can be used.

As the hydrophilic substance (B), it is possible to use a hydrophilic substance that has been subjected to, on its surface, a coating treatment (coating) (e.g., phosphonate whose surface has been coated or ammonium polyphosphate whose surface has been coated).

(Hindered amine (C))

The present expanded particles preferably further contain a hindered amine (C). In a case where the present expanded particles contain the hindered amine (C), it is possible to bring about an advantage of providing expanded particles that can give an in-mold expanded product having excellent flame retardancy, in addition to excellent surface appearance and productivity.

In recent years, the standards for flame retardancy in various industrial fields (e.g., electric devices and electronic devices, particularly devices used in electric vehicles and the like) tend to be stricter. Therefore, there are demands for an in-mold expanded product having excellent flame retardancy. Examples of such standards for flame retardancy include an oxygen index (OI) and a vertical burning test (UL94). The present expanded particles preferably contain the hindered amine (C) because the fact of containing the hindered amine (C) makes it possible to provide an in-mold expanded product having excellent flame retardancy that can satisfy those standards.

The present expanded particles contain the hindered amine (C) in an amount of preferably 1.0% by weight to 10.0% by weight, more preferably 2.0% by weight to 8.0% by weight, further preferably 2.5% by weight to 7.0% by

weight, and still further preferably 3.0% by weight to 6.0% by weight, with respect to 100% by weight as a total amount of the polypropylene-based expanded particles. (i) In a case where the present expanded particles contain the hindered amine (C) in an amount of more than 0.1% by weight, it is possible to obtain an in-mold expanded product which is excellent in non-ignition property and excellent self-extinguishing property. (ii) In a case where the present expanded particles contain the hindered amine (C) in an amount of not more than 10.0% by weight, it is possible to suppress agglomeration (blocking) of the resin particles during the expansion step described later.

In the present specification, the hindered amine (C) is intended to mean a hindered amine that has an OR group directly substituted on an N atom (where R is a saturated or unsaturated monovalent hydrocarbon group) (hereinafter such a hindered amine may also be referred to as an N-substituted hindered amine). In other words, in the present specification, a hindered amine that has no OR group directly substituted on the N atom is not regarded as a hindered amine (C). The hindered amine (C) is not limited to any particular one, provided that the hindered amine has an OR group directly substituted on the N atom (where R is a saturated or unsaturated monovalent hydrocarbon group). A number of known subclasses of the hindered amine can be used as the hindered amine (C). As the hindered amine (C), one type of hindered amine can be used alone or two or more types of hindered amines can be used in combination.

In an embodiment of the present invention, the hindered amine (C) is preferably an N-substituted hindered amine that contains a triazine component (hereinafter such an N-substituted hindered amine may also be referred to as a triazine skeleton-containing hindered amine). The triazine skeleton-containing hindered amine is preferably (i) a compound of CAS No. 191680-81-6 ((i-1) which is a reaction product of N,N'-bis(3-aminopropyl)ethylenediamine and a product obtained by causing cyclohexane to react with a reaction product of peroxidized N-butyl-2,2,6,6,-tetramethyl-4-piperidinamine and 2,4,6-trichloro-1,3,5-triazine, (i-2) which can also be said to be a reaction product of 2,4-bis((1-cyclohexyloxy-2,2,6,6-tetramethylpiperidin-4-yl)butylamino)-6-chloro-S-triazine and N,N'-bis(3-aminopropyl)ethylenediamine, (i-3) which can also be said to be N,N',N'''-tris{2,4-bis[(1-hydrocarbyloxy-2,2,6,6-tetramethylpiperidin-4-yl) alkylamino]-s-triazin-6-yl}-3,3'-ethylenediiminodipropylamine) and/or (ii) bis(1-undecanoxy-2,2,6,6-tetramethylpiperidin-4-yl)carbonate. It is also possible to use an isomer of the triazine skeleton-containing hindered amine described above and a crosslinked derivative of the triazine skeleton-containing hindered amine described above. The triazine skeleton-containing hindered amine is disclosed in more detail in page 2, line 32 to page 4, line 6 of the specification of European Patent No. 0889085.

A commercially available product can be suitably used as the triazine skeleton-containing hindered amine. Examples of the commercially available product of the triazine skeleton-containing hindered amine include NOR116 (compound of CAS No. 191680-81-6) of FLAMSTAB (registered trademark) manufactured by BASF, NOW XP of HOSTAVIN (registered trademark) manufactured by CLARIANT, and ADK STAB LA-81 (bis(1-undecanoxy-2,2,6,6-tetramethylpiperidin-4-yl)carbonate) manufactured by ADEKA Corporation.

In an embodiment of the present invention, the hindered amine (C) can be a compound represented by the following structural formula (iv):

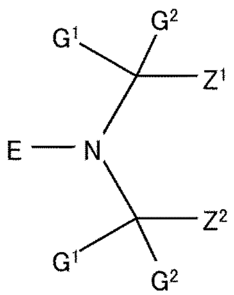

···(iv)

where $G^1$ and $G^2$ are independently a $C_1$-$_8$ alkyl group or pentamethylene; $Z^1$ and $Z^2$ are each methyl group, or $Z^1$ and $Z^2$ together form a bond component which may additionally be substituted by an ester group, an ether group, an amide group, an amino group, a carboxy group, or a urethane group; and E is a $C_1$-$_8$ alkoxy group, a $C_5$-$_{12}$ cycloalkoxy group, a $C_7$-$_{15}$ aralkoxy group, a -O-C(O)-$C_{1-18}$ alkyl group, or a -O-T-$(OH)_b$ group; where T is (i) a $C_1$-$_{18}$ alkylene chain, (ii) a $C_5$-$_{18}$ cycloalkylene chain, (iii) a $C_5$-$_{18}$ cycloalkenylene chain, or (iv) a $C_1$-$_4$ alkylene chain substituted by a phenyl group or by a $C_1$-$_4$ alkyl-substituted phenyl group; b is 1 to 3 and does not exceed the number of carbon atoms in T, and when b is 2 or 3, each hydroxyl group is linked to a different carbon atom of T.

The compound represented by the structural formula (iv) is disclosed in detail in the specification of European Patent No. 2225318, and, more specifically, disclosed in page 5, line 35 to page 25, line 48 of the specification of European Patent No. 2225318.

In an embodiment of the present invention, the hindered amine (C) can be a compound represented by the following structural formula (v):

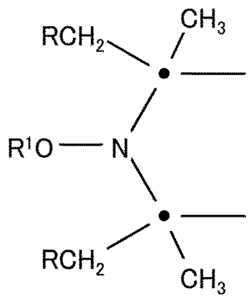

···(v)

where R is hydrogen or a methyl group, and $R^1$ is a $C_{1-18}$ alkyl group, a $C_{2-18}$ alkenyl group, a $C_{2-18}$ alkynyl group, a $C_{5-12}$ cycloalkyl group, a $C_{5-8}$ cycloalkenyl group, a $C_{6-10}$ aryl group, or a $C_{7-9}$ aralkyl group.

The compound represented by the above structural formula (v) is disclosed in more detail in page 3, line 33 to page 8, line 58 of the specification of European Patent No. 0309402.

In an embodiment of the present invention, the hindered amine (C) can be a compound represented by the following structural formula (vi):

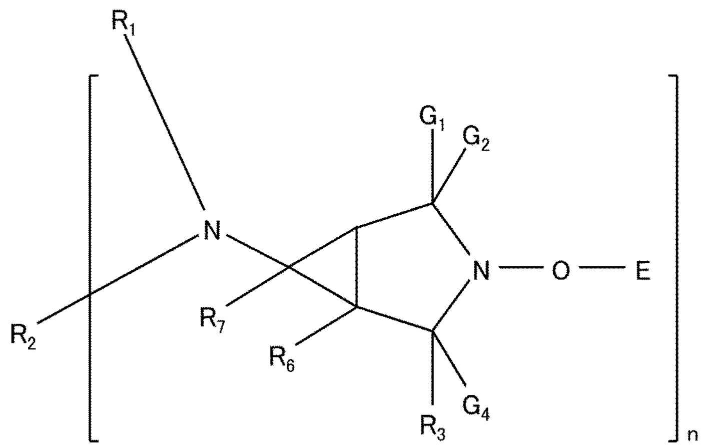

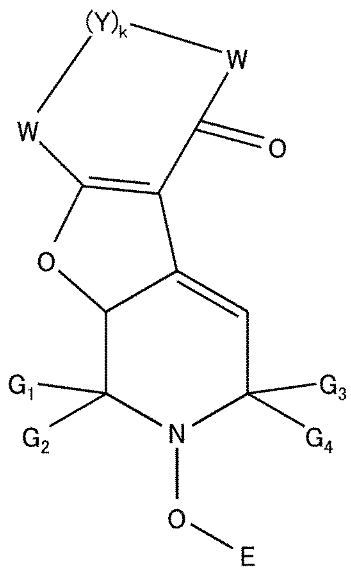

···(vi)

where E, k, Y, W, $R_1$ to $R_7$, and $G_1$ to $G_4$ are as defined in the specification of US Patent No. 8598369.

The compound represented by the above structural formula (vi) is disclosed in more detail in Examples 1 through 12 and Tables 1 through 5 in the specification of US Patent No. 8598369.

<Ratio between components in expanded particles>

The present expanded particles preferably contain phosphonate as the hydrophilic substance (B) and contain the hindered amine (C), because such expanded particles can provide an in-mold expanded product having excellent flame retardancy, in addition to excellent surface appearance and productivity.

(Ratio of hydrophilic substance (B) to hindered amine (C))

In a case where the present expanded particles contain phosphonate as the hydrophilic substance (B) and contain the hindered amine (C), a ratio of a weight of the hydrophilic substance (B) contained in the present expanded particles to a weight of the hindered amine (C) contained in the present expanded particles (hereinafter referred to as a ratio (B)/(C)) is preferably 1.0 to 20.0, more preferably 1.0 to 15.0, more preferably 1.0 to 10.0, more preferably 2.0 to 10.0, more preferably 2.0 to 7.0, more preferably 2.0 to 5.0, further preferably 2.0 to 4.0. In a case where the ratio "(B)/(C)" is 1.0 to 20.0, a resulting in-mold expanded product (a) has excellent flame retardancy, and (b) is capable of suppressing ignition of a nearby flammable material which occurs due to burning particles when the in-mold expanded product is burned (i.e., the in-mold expanded product is excellent in self-extinguishing property). In addition, (c) there is no risk of impairing various properties (mechanical property, shock-absorbing property, and the like) of the in-mold expanded product.

(Ratio of polypropylene-based resin (A) to total amount of hydrophilic substance (B) and hindered amine (C))

The following description will discuss a case in which the present expanded particles contain phosphonate as the hydrophilic substance (B) and contain the hindered amine (C). In this case, a ratio of a weight of the polypropylene-based resin (A) contained in the present expanded particles to the total amount (total weight) of the hydrophilic substance (B) and the hindered amine (C) (hereinafter referred to as a ratio (A)/{(B)+(C)}) is preferably 1 to 10, more preferably 1 to 7, more preferably 1 to 5, more preferably 2 to 5, and further preferably 3 to 5. (i) In a case where the ratio "(A)/{(B)+(C)}" in the expanded particles is not more than 10, a resulting in-mold expanded product has good flame retardancy. (ii) In a case where the ratio "(A)/{(B)+(C)}" in the expanded particles is not less than 1, a resulting in-mold expanded product has superior surface appearance.

(Other additives)

The present expanded particles can contain any additives other than the hydrophilic substance (B) and the hindered amine, provided that the effects of the present invention are not impaired. Examples of such other additives include antioxidants, UV light absorbing agents, peroxide scavengers, nucleating agents, antistatic agents, antioxidants, photo stabilizers, electrically conductive agents, lubricants, fillers, carbon black, and powdered activated carbon. In the production of the present expanded particles, (a) such other additive(s) can be directly added to a blended product (described later) or to a polypropylene-based resin composition during production of resin particles. Alternatively, (b) it is possible to prepare a master batch in advance by adding, at a high concentration, the additive(s) in another resin and then add the obtained master batch resin to a blended product or to a polypropylene-based resin composition. The resin used in preparation of the master batch resin is preferably a polypropylene-based resin.

Examples of the antioxidants include alkylated monophenols, alkyltyhiomethylphenols, hydroquinones and alkylated hydroquinones, tocopherols, hydroxylated thiodiphenyl ethers, alkylidene bisphenols, O-containing benzyl compounds, N-containing benzyl compounds, S-containing benzyl compounds, hydroxybenzylated malonates, aromatic hydroxybenzyl compounds, acylaminophenols, and amides and esters of hydroxyphenylpropionic acid. One type of these antioxidants can be used alone or two or more of these can be used in combination.

An amount of the antioxidant contained in the present expanded particles is preferably 0.03% by weight to 1.00% by weight, more preferably 0.05% by weight to 0.70% by weight, and further preferably 0.10% by weight to 0.50% by weight, with respect to 100% by weight as a total amount of the polypropylene-based expanded particles, because such amounts of the antioxidant contained in the present expanded particles can suppress deterioration of a resulting in-mold expanded product at a high temperature (e.g., approximately 110°C) and, as a result, maintain flame retardancy for a longer period.

Examples of the UV light absorbing agents include benzotriazoles, benzophenones, benzoic acid esters, nickel complexes, hindered amines which have no OR group directly linked to N atoms (and which are not included in the hindered amine (C) in accordance with an embodiment of the present invention), and oxamides. One type of these UV light absorbing agents can be used alone or two or more of these can be used in combination.

An amount of the UV light absorbing agent contained in the present expanded particles is preferably 0.01% by weight to 1.00% by weight, more preferably 0.05% by weight to 0.50% by weight, and further preferably 0.10% by weight

to 0.30% by weight, with respect to 100% by weight as a total amount of the polypropylene-based expanded particles because such amounts of the UV light absorbing agent can suppress ultraviolet-induced deterioration of a resulting in-mold expanded product and, as a result, maintain flame retardancy for a longer period.

Examples of the nucleating agents include talc, titanium oxide, silica (silicon dioxide), silicate, alumina, diatomaceous earth, calcium carbonate, magnesium oxide, magnesium carbonate, magnesium sulfate, calcium phosphate, feldspar apatite, and barium sulfate. Examples of silicate include inorganic nucleating agents (such as talc, magnesium silicate, kaolin, halloysite, dickite, aluminum silicate, and zeolite), bis(p-methylbenzylidene)sorbitol, dibenzylidene sorbitol, bis(p-ethylbenzylidene)sorbitol, aluminum hydroxy(t-butylbenzoic acid), sodium bis(4-t-butyl-phenyl)phosphate, methylene bis(2,4-di-t-butylphenyl)phosphate sodium salt, potassium rosinate, magnesium rosinate, N,N'-dicyclohexyl-2,6-naphthalene dicarboxamide, N,N',N''-tris(2-methylcyclohexan-1-yl)propane-1,2,3-triylcarboxamide, and the like. Commercially available nucleating agents can be used as these nucleating agents. Examples of the commercially available product include organic nucleating agents such as GEL ALL of New Japan Chemical Co., Ltd. and ADK STAB NA11 of ADEKA Corporation. One type of these nucleating agents can be used alone or two or more of these can be used in combination. An inorganic nucleating agent and an organic nucleating agent can be used in combination. The nucleating agent can also be referred to as a crystal nucleating agent.

An amount of the nucleating agent contained in the present expanded particles is preferably 0.005% by weight to 3.000% by weight, more preferably 0.010% by weight to 2.000% by weight, and most preferably 0.030% by weight to 1.000% by weight, with respect to 100% by weight as a total amount of the polypropylene-based expanded particles, from the viewpoint of uniformity of average cell diameter.

Examples of the lubricants include fatty acid esters, polyethylene waxes (which may be optionally partially saponified), zinc stearate, glycerol esters, and alkaline earth metal soaps. One type of these lubricants can be used alone or two or more of these can be used in combination.

An amount of the lubricant contained in the present expanded particles is preferably 0.01% by weight to 1.00% by weight, more preferably 0.05% by weight to 0.50% by weight, and further preferably 0.10% by weight to 0.30% by weight, with respect to 100% by weight as a total amount of the polypropylene-based expanded particles, because such an amount of lubricant makes it possible to improve dispersibility of another additive.

Examples of the filler include silicates, glass fibers, kaolin, wood flour, graphite, graphene, and cellulose nanofibers. One type of these fillers can be used alone or two or more of these can be used in combination.

An amount of the filler contained in the present expanded particles is, for example, preferably 0.01% by weight to 10.00% by weight, more preferably 0.05% by weight to 7.00% by weight, and further preferably 0.10% by weight to 5.00% by weight, with respect to 100% by weight as a total amount of the present expanded particles.

The present expanded particles can further contain a pigment such as carbon black or graphite in order to color a resulting in-mold expanded product in gray or black. An amount of carbon black contained in the present expanded particles is preferably 0.01% by weight to 6.00% by weight, more preferably 0.30% by weight to 4.00% by weight, and further preferably 0.50% by weight to 3.00% by weight, with respect to 100% by weight as a total amount of the present expanded particles, from the viewpoint of not impairing flame retardancy and from the viewpoint of uniform coloring.

The present expanded particles can further contain powdered activated carbon in order to further improve flame retardancy of a resulting in-mold expanded product. An amount of powdered activated carbon contained in the present expanded particles is preferably 0.8% by weight to 2.8% by weight and more preferably 1.0% by weight to 2.5% by weight.

<Physical properties of polypropylene-based expanded particles>

(Moisture content of expanded particles)

A moisture content of the present expanded particles is preferably 1.0% to 60.0%, more preferably 3.0% to 50.0%, more preferably 7.0% to 40.0%, further preferably 11.0% to 30.0%, still further preferably 15.0% to 30.0%, and particularly preferably 20.0% to 30.0%. (i) In a case where the moisture content of the present expanded particles is not less than 1.0%, it is possible to bring about an advantage of providing an in-mold expanded product having excellent surface appearance, even if no internal pressure is imparted to the expanded particles or an internal pressure imparted to the expanded particles is small. (ii) In a case where the moisture content of the present expanded particles is not more than 60.0%, it is possible to bring about an advantage of suppressing shrinkage of the expanded particles immediately after expansion.

In the present specification, the moisture content of expanded particles is intended to mean a moisture content of expanded particles after drying with a dryer (which may simply be referred to as "after drying") and/or at the time of molding. That is, the present expanded particles only needs to have a moisture content of 1.0% to 60.0% at least after drying or at the time of molding. For example, in a case where the moisture content of the expanded particles immediately after expansion (expanded particles before drying with a dryer or before being subjected to molding) is more than 60.0%, the moisture content of the expanded particles at the time of molding can be adjusted to 1.0% to 60.0% by a method in

which the expanded particles are dried with a dryer or the like before the time of molding. For the present expanded particles, the moisture content of the expanded particles immediately after expansion and the moisture content of the expanded particles after drying or at the time of molding are both preferably 1.0% to 60.0%, because such a condition makes it possible to reduce or eliminate a time taken to dry the expanded particles, and achieve superior productivity.

That is, the moisture content after drying and/or at the lime of molding the present expanded particles is preferably 1.0% to 60.0%, more preferably 3.0% to 50.0%, more preferably 7.0% to 40.0%, further preferably 11.0% to 30.0%, still further preferably 15.0% to 30.0%, and particularly preferably 20.0% to 30.0%. The moisture content immediately after expansion of the present expanded particles may be 1.0% to 80.0%, and is preferably 1.0% to 60.0%, more preferably 3.0% to 50.0%, further preferably 11.0% to 30.0%, still further preferably 15.0% to 30.0%, and particularly preferably 20.0% to 30.0%.

Note that, in the present specification, the "expanded particles immediately after expansion" refer to expanded particles immediately after expansion the resin particles. The expanded particles immediately after expansion are, more specifically, intended to mean expanded particles which are immediately after (within 120 minutes) the releasing step (described later) and are before drying or molding. (i) In a case where, at the time of molding, the present expanded particles are impregnated with air (an internal pressure is imparted), the "expanded particles at the time of molding" are intended to mean expanded particles immediately before (within 120 minutes) impregnation with air. (ii) In a case where, at the time of molding, the present expanded particles are not impregnated with air, the "expanded particles at the time of molding" are intended to mean expanded particles immediately before (within 120 minutes) filling a mold or the like with the present expanded particles.

In molding the expanded particles, as described above, the expanded particles (expanded particles immediately after expansion) can be dried with a dryer so as to adjust the moisture content of the expanded particles during a period from the time immediately after expansion to the time of molding. Meanwhile, even if the moisture content of the expanded particles before drying falls within the range of an embodiment of the present invention, the moisture content of the expanded particles after drying may fall outside the range of an embodiment of the present invention. This is, for example, a case in which the expanded particles are simply dried without adjusting a drying time so that the moisture content of the expanded particles after drying falls within the range (1.0% to 60.0%) of an embodiment of the present invention. Depending on the drying temperature, for example, in a case where the expanded particles are dried for 20 hours or more in a dryer at 100°C, the moisture content of the expanded particles after drying falls outside (less than 1%) the range of an embodiment of the present invention even if the moisture content of the expanded particles before drying (the moisture content of the expanded particles immediately after expansion) is within the range (1.0% to 60.0%) of an embodiment of the present invention.

In a case where the moisture content of the expanded particles after drying (the moisture content of the expanded particles at the time of molding) falls outside the range of an embodiment of the present invention even though the moisture content of the expanded particles before drying (the moisture content of the expanded particles immediately after expansion) falls within the range of an embodiment of the present invention as described above, such expanded particles after drying are not regarded as the present expanded particles. The "moisture content of the expanded particles after drying with a dryer" is defined as a value obtained by measurement immediately after the drying treatment (within 120 minutes after the end of the drying treatment) and before the time of molding.

For the expanded particles immediately after expansion, moisture derived from an aqueous dispersion medium or the like used in the expansion step may be attached to the surface of the expanded particles. The "moisture content of expanded particles" in the present specification is intended to mean an amount of moisture contained inside the expanded particles, and moisture attached to the surface of the expanded particles is not regarded as moisture contained in the expanded particles. In other words, such moisture is not used in calculation of the moisture content of expanded particles.

In the present specification, a method for measuring the moisture content of the expanded particles (expanded particles immediately after expansion, expanded particles after drying with a dryer, and expanded particles at the time of molding) includes the following processes (1) through (4). (1) Water attached to the surface of the expanded particles is dehydrated by air (compressed air) flow until there is no temperature change in the air flow due to an effect of latent heat of vaporization generated in association with the dehydration of the expanded particles; (2) the expanded particles are left to stand in a room under normal temperature and normal pressure for 30 minutes, and then a weight (W1) of the expanded particles is measured; (3) the expanded particles are further dried in an oven at 150°C for 1 hour, and a weight (W2) of the expanded particles after drying is measured; and (4) the moisture content of the expanded particles is calculated by the following formula:

$$\text{Moisture content (\%)} = (W1-W2)/W2 \times 100.$$

A method for adjusting the moisture content of the present expanded particles is not particularly limited, and

examples thereof include: (i) a method in which resin particles containing the hydrophilic substance (B) are expanded and thus expanded particles are obtained; (ii) a method in which an amount of the hydrophilic substance (B) added is further adjusted in the method (i); (iii) a method in which, in expansion of the resin particles (in production of expanded particles), an amount of a dispersion agent used, an expansion temperature in the temperature-increasing and pressure-increasing step (described later), a maintaining time in the maintaining step (described later), and/or a particle weight of expanded particles are adjusted; and (iv) a method in which drying conditions of expanded particles after expansion is adjusted. The above method (i) in which the resin particles containing the hydrophilic substance (B) are expanded to obtain expanded particles is preferable because it is possible to obtain expanded particles having a high expansion rate.

(Density (bulk density) of expanded particles)

A density (bulk density) of the present expanded particles is not particularly limited, and is preferably 15.0 g/L to 400.0 g/L, more preferably 60.0 g/L to 200.0 g/L, further preferably 70.0 g/L to 160.0 g/L, and still further preferably 80.0 g/L to 155.0 g/L. (i) In a case where the bulk density of the present expanded particles is not less than 15.0 g/L, it is possible to bring about an advantage that an internal pressure necessary for molding the expanded particles is decreased. (ii) In a case where the bulk density of the present expanded particles is not more than 400.0 g/L, it is possible to bring about an advantage of obtaining an in-mold expanded product having excellent light weight property.

In the present specification, a method for measuring the bulk density of expanded particles includes the following processes (1) through (3). (1) The expanded particles are introduced into a vessel having a volume V ($cm^3$) until the expanded particles overflow from the vessel; (2) the top particles (upper surface) of the vessel are leveled off, and a weight W (g) of the expanded particles in the vessel is measured; and (3) the bulk density of the expanded particles is calculated by the following formula:

Bulk density (g/L) of expanded particles = weight W (g) of expanded particles/{volume V ($cm^3$) of vessel/1000}.

Note that, in a case where the present expanded particles are impregnated with air (an internal pressure is imparted) at the time of molding of the present expanded particles, the density of the expanded particles is intended to mean the bulk density of the expanded particles before the impregnation with air (before imparting an internal pressure).

(Average cell diameter)

The average cell diameter of the present expanded particles is not particularly limited, and is preferably 100 $\mu$m to 600 $\mu$m, more preferably 150 $\mu$m to not more than 450 $\mu$m, and further preferably 200 $\mu$m to not more than 400 $\mu$m. (i) In a case where the average cell diameter of the present expanded particles is not less than 100 $\mu$m, it is possible to obtain an in-mold expanded product having excellent surface appearance. (ii) In a case where the average cell diameter of the present expanded particles is not more than 600 $\mu$m, secondary expansion property during in-mold expansion molding of the expanded particles becomes favorable, so that it is possible to obtain an in-mold expanded product having excellent surface appearance. It can also be said that the average cell diameter of expanded particles is a diameter of cells of expanded particles.

In the present specification, the average cell diameter of expanded particles is measured according to the following processes (1) through (5). (1) An expanded particle is cut at the center thereof with use of a razor (such as a high stainless steel double-beveled blade manufactured by FEATHER Safety Razor Co., Ltd.); (2) then, a resulting cross section of the expanded particle is observed with use of an optical microscope (VHX-5000 manufactured by Keyence Corporation) at a magnification of 50 times; (3) in an image obtained by the observation, a straight line is drawn through the center or substantially center of the cross section of the expanded particle; (4) (4-1) the number (n) of cells present on the line is counted, and (4-2) a length of a line segment cut from the straight line at intersections of the straight line and the surface of the expanded particle is measured and regarded as a diameter L of the expanded particle; and (5) an average cell diameter of expanded particles is calculated by the following formula: Average cell diameter ($\mu$m) = L/n.

(High temperature-side melting heat quantity of expanded particles)

A high temperature-side melting heat quantity of the present expanded particles is preferably 5.0 J/g to 25.0 J/g, more preferably 8.0 J/g to 22.0 J/g, and further preferably 10.0 J/g to 20.0 J/g. (i) In a case where the high temperature-side melting heat quantity of the expanded particles is not less than 5.0 J/g, it is possible to suppress occurrence of sink marks in the surfaces of a resulting in-mold expanded product during in-mold expansion molding of the in-mold expanded product and suppress dimensional shrinkage. (ii) In a case where the high temperature-side melting heat quantity of the expanded particles is not more than 25.0 J/g, it is possible to obtain an in-mold expanded product which has excellent

internal fusibility and a smooth surface. It can also be said that the high temperature-side melting heat quantity is a high temperature-side melting peak heat quantity.

The high temperature-side melting heat quantity of the expanded particles is measured by the following processes (1) through (5): (1) approximately 5 mg of the expanded particles is measured out; (2) a temperature of the expanded particles thus measured out is increased from 10°C to 190°C at a temperature increase rate of 10°C/minute, so that the expanded particles are melted; (3) in a DSC curve of the expanded particles obtained in the process (2), a baseline is created by connecting, with a straight line, a point representing a temperature before the start of melting and a point representing a temperature after the end of the melting; (4) a straight line which passes through a maximum point between a melting peak on the high-temperature side or a melting peak at the highest temperature and an adjacent melting peak is drawn perpendicularly to the X-axis; and (5) a quantity of heat (J/g) calculated from a high-temperature side region enclosed by the baseline, the straight line passing through the maximum point, and the DSC curve is regarded as the high temperature-side melting heat quantity of the expanded particles.

<Drying>

An aspect of the present invention is polypropylene-based expanded particles having a moisture content of 1.0% to 60.0% after drying with a dryer.

A temperature of the drying (e.g., temperature inside the dryer) is not particularly limited, provided that the moisture content of the expanded particles after drying is (becomes) 1.0% to 60.0%. The drying temperature is, for example, preferably 40°C to 100°C, more preferably 50°C to 95°C, and further preferably 60°C to 90°C.

A time of the drying (drying time) is not particularly limited, provided that the moisture content of the expanded particles after drying is (becomes) 1.0% to 60.0%. The drying time is, for example, preferably 10 minutes to 20 hours, more preferably 20 minutes to 3 hours, and further preferably 20 minutes to 2 hours.

Noted that, in a case where the expanded particles are left in a state where the expanded particles are aerated (subjected to blowing air) for a long period of time even though the temperature of the drying is normal temperature of less than 40°C (e.g., 15°C to 30°C), the moisture content of the expanded particles can be reduced.

A method of the drying (drying method) is not particularly limited. For example, hot air drying is preferable. In other words, the dryer is preferably a hot air dryer. Specific example aspects of hot air drying include: a method of blowing hot air into a dryer; and a drying method of blowing hot air into a bath while causing the expanded particles to flow in a fluidized bed.

Noted that the polypropylene-based expanded particles in accordance with an embodiment of the present invention are not necessarily dried with a dryer. For example, in a case where the moisture content of the expanded particles before drying is within the range (1.0% to 60.0%) of an embodiment of the present invention, the expanded particles having such a moisture content can be used for molding without drying.

[3. Method for producing polypropylene-based expanded particles]

A polypropylene-based expanded particle production method in accordance with an embodiment of the present invention is not particularly limited, and preferably includes: a dispersion step of dispersing polypropylene-based resin particles, an aqueous dispersion medium, and a blowing agent in a vessel; and a releasing step of releasing, into a region having a pressure lower than an internal pressure of the vessel, a dispersion slurry obtained in the dispersion step.

In other words, it can also be said that the polypropylene-based expanded particles in accordance with an embodiment of the present invention are obtained by expansion polypropylene-based resin particles. It can also be said that the polypropylene-based expanded particles in accordance with an embodiment of the present invention contain polypropylene-based resin particles.

In the present specification, the "method for producing polypropylene-based expanded particles in accordance with an embodiment of the present invention" may be referred to as the "present production method".

(Granulation step)

The present production method can include a granulation step of preparing polypropylene-based resin particles before the expansion step. In the present specification, the "polypropylene-based resin particles" may be referred to as "resin particles".

The granulation step in the present production method is not particularly limited, provided that it is possible to obtain resin particles. Examples of the granulation step include a method in which an extruder is used. Specifically, resin particles can be prepared by the following processes (1) through (5): (1) a blended product is prepared by blending predetermined amounts of the polypropylene-based resin (A), and, as necessary, the hydrophilic substance (B), the hindered amine (C), and another additive; (2) the blended product is introduced into an extruder, and the blended product

is melted and kneaded so as to prepare a polypropylene-based resin composition; (3) the polypropylene-based resin composition is extruded from a die provided in the extruder; (4) the extruded polypropylene-based resin composition is cooled by, for example, passing the polypropylene-based resin composition through water, so as to solidify the polypropylene-based resin composition; and (5) subsequently, with use of a cutter, the solidified polypropylene-based resin composition is chopped into an intended shape such as a cylindrical shape, an elliptical shape, a spherical shape, a cuboid shape, a rectangular parallelepiped shape, or the like, so that polypropylene-based resin particles are obtained. Alternatively, the resin particles can be obtained as follows: in the procedure (3), the polypropylene-based resin composition which has been melted and kneaded is extruded directly into water from the die provided in the extruder and, immediately after the extrusion, the polypropylene-based resin composition is cut into particles, cooled, and solidified. Melting and kneading a blended product in this manner makes it possible to obtain resin particles which are more uniform.

Note that a ratio between amounts of the polypropylene-based resin (A), the hydrophilic substance (B), and/or the hindered amine (C) contained in the resin particles (a) is a ratio between the amounts of the polypropylene-based resin (A), the hydrophilic substance (B), and/or the hindered amine (C) in the blended product prepared in the process (1), and (b) can also be said to be a ratio between the amounts of the polypropylene-based resin (A), the hydrophilic substance (B), and/or the hindered amine (C) contained in the expanded particles. Therefore, in regard to the aspects of the components, that is, the polypropylene-based resin (A), the hydrophilic substance (B), and the hindered amine (C) components in the resin particles, the above descriptions in the sections of <Polypropylene-based resin (A)>, <Hydrophilic substance (B)>, and <Hindered amine (C) > can be applied as appropriate.

Note that, in order to uniformly disperse the hydrophilic substance (B) and/or the hindered amine (C) in the resin particles, it is possible to melt and knead the hydrophilic substance (B) and the hindered amine (C) in advance in the extruder and prepare a mixture. The mixture and the polypropylene-based resin (A) and, as necessary, other additive(s) can also be melted and kneaded to prepare the resin particles.

(Physical properties of polypropylene-based resin particles)

(Melting point of resin particles)

A melting point of the resin particles is not particularly limited, and is preferably 122.0°C to 159.0°C, more preferably 127.0°C to 157.0°C, more preferably 132.0°C to 151.0°C, and more preferably 135.0°C to 148.0°C, and further preferably 136.0°C to 145.0°C, and particularly preferably 138.0°C to 144.0°C. (i) In a case where the melting point of the resin particles is not less than 122.0°C, it is possible to obtain an in-mold expanded product having excellent dimensional stability at a high temperature. (ii) In a case where the melting point of the resin particles is not more than 159.0°C, an in-mold expanded product can be obtained by in-mold expansion molding at a low steam pressure.

In the present specification, the melting point of the resin particles is a value measured and obtained by a differential scanning calorimetry (hereinafter referred to as "DSC method"). A specific operation procedure is as follows: (1) a temperature of 5 mg to 6 mg of the resin particles is increased from 40.0°C to 220.0°C at a temperature increase rate of 10.0°C/min so that the resin particles are melted; (2) after that, the temperature of the melted resin particles is decreased from 220.0°C to 40.0°C at a temperature decrease rate of 10.0°C/min so that the resin particles are crystallized; and (3) then, the temperature of the crystallized resin particles is increased from 40.0°C to 220.0°C at a temperature increase rate of 10°C/min. It is possible to determine, as the melting point of the resin particles, a temperature at a peak (melting peak) in a DSC curve of the resin particles which DSC curve is obtained in the second temperature increase (i.e., in the process (3)). Note that, in a case where a plurality of peaks (melting peaks) are present in the DSC curve of the resin particles obtained during the second temperature increase by the above-described method, a temperature at a peak (melting peak) having the greatest melting heat quantity is regarded as the melting point of the resin particles. As a differential scanning calorimeter, for example, a differential scanning calorimeter of a DSC6200 type manufactured by Seiko Instruments Inc. can be used.

A melt index (MI) of the resin particles is not particularly limited, and is preferably 3.0 g/ 10 minutes to 30.0 g/ 10 minutes, more preferably 4.0 g/ 10 minutes to 20.0 g/10 minutes, further preferably 5.0 g/10 minutes to 15.0 g/10 minutes, and particularly preferably 6.0 g/ 10 minutes to 13.0 g/10 minutes. MI may be referred to as "melt flow rate (MFR)".

In a case where the MI of the resin particles is not less than 3.0 g/10 minutes, flowability of the polypropylene-based resin at the time of expansion is good and expansion is easily carried out. In a case where the MI of the resin particles is not more than 30.0 g/10 minutes, the resin particles have adequate flowability. Therefore, expanded particles having a high expansion rate can be obtained. In particular, in a case where the MI of the resin particles is 3.0 g/10 minutes to 8.0 g/10 minutes, it is possible to efficiently produce expanded particles which can suitably provide an in-mold expanded product having a relatively high density (e.g., a density of more than 92.0 g/L).

In the present specification, the MI of the resin particles is a value measured and obtained with use of an MI measurement device described in JIS K7210:1999 under the following conditions: a diameter $\varphi$ of an orifice is 2.0959$\pm$0.005 mm; a length of the orifice is 8.000$\pm$0.025 mm; a load is 2.16 kgf; and a temperature is 230°C (230$\pm$0.2°C).

A weight per particle (particle weight) of the resin particles is not particularly limited, and is preferably 0.3 mg/particle to 10.0 mg/particle, more preferably 0.4 mg/particle to 8.0 mg/particle, more preferably 0.5 mg/particle to 7.0 mg/particle, more preferably 0.7 mg/particle to 6.0 mg/particle, more preferably 1.0 mg/particle to 5.0 mg/particle, and further preferably 1.2 mg/particle to 5.0 mg/particle. The particle weight of the resin particles can affect a moisture content of resulting expanded particles. In other words, it is possible to adjust the moisture content of the expanded particles by adjusting the particle weight of the resin particles which are a raw material of the expanded particles. For example, as the particle weight of the resin particles becomes larger, the moisture content of the expanded particles obtained tends to be decreased. As the particle weight of the resin particles becomes smaller, the moisture content of the expanded particles obtained tends to be increased. In a case where the particle weight of the resin particles falls within the above range, it is possible to bring about an advantage of easily obtaining expanded particles having a moisture content of 1.0% to 60%.

(Dispersion step)

It can be said that the dispersion step is, for example, a step of preparing a dispersion slurry in which resin particles and a blowing agent and, as necessary, a dispersion agent and/or a dispersion auxiliary agent are dispersed in an aqueous dispersion medium.

The vessel is not limited to any particular one, and is preferably a vessel which can withstand an expansion temperature and an expansion pressure described later. The vessel is, for example, preferably a pressure-resistant vessel, and more preferably an autoclave-type pressure-resistant vessel. The vessel can also be provided with a stirrer therein.

The aqueous dispersion medium is not limited to any particular one, provided that the aqueous dispersion medium allows resin particles, a blowing agent, and the like to be uniformly dispersed. Examples of the aqueous dispersion medium include (a) a dispersion medium obtained by adding methanol, ethanol, ethylene glycol, glycerin or the like to water and (b) water such as tap water and industrial water. Preferable examples of the aqueous dispersion medium include: pure water such as RO water (water purified by a reverse osmosis membrane method), distilled water, and deionized water (water purified by an ion exchange resin); and ultrapure water. This is because such aqueous dispersion media make it possible to stably produce expanded particles.

An amount of the aqueous dispersion medium to be used is not particularly limited, and is preferably 100 parts by weight to 500 parts by weight, with respect to 100 parts by weight of resin particles. (a) Using the aqueous dispersion medium in an amount of not less than 100 parts by weight prevents a decrease in the stability of the dispersion slurry (in other words, the resin particles are well dispersed). (b) Using the aqueous dispersion medium in an amount not more than 500 parts by weight prevents productivity from decreasing.

Examples of the blowing agent include (a) inorganic blowing agents such as (a-1) inorganic gas such as nitrogen, carbon dioxide, air (mixture of oxygen, nitrogen, and carbon dioxide) and (a-2) water and (b) organic blowing agents such as (b-1) saturated hydrocarbon having 3 to 5 carbon atoms such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, dichloromethane, dichlorodifluoroethane, chloroethane, and hydrofluoroolefin. As the blowing agent, at least one blowing agent selected from the group consisting of the inorganic blowing agents and the organic blowing agents described above can be used. In a case where two or more blowing agents are used in mixture, a mixing ratio can be adjusted as appropriate according to a purpose. From the viewpoint of environmental impact and expansion force, the inorganic blowing agents are preferable among the blowing agents described above. The blowing agent is more preferably an inorganic blowing agent that contains carbon dioxide, and is further preferably carbon dioxide, in that such blowing agents have a plasticizing effect to a proper extent and make it easy to improve an expansion property of expanded particles in the production of the present expanded particles.

An amount of the blowing agent to be used is not particularly limited, and can be adjusted as appropriate according to (a) a type of the blowing agent and/or (b) an intended expansion rate of the expanded particles. An amount of the blowing agent to be used is, for example, preferably 1 part by weight to 10000 parts by weight, more preferably 1 part by weight to 5000 parts by weight, and further preferably 1 part by weight to 1000 parts by weight, with respect to 100 parts by weight of the resin particles. In a case where the amount of the blowing agent to be used is not less than 1 part by weight with respect to 100 parts by weight of resin particles, it is possible to obtain expanded particles having suitable density. In a case where the amount of the blowing agent to be used is not more than 10000 parts by weight with respect to 100 parts by weight of resin particles, an effect according to the amount of the blowing agent used can be achieved, and is therefore no economical waste will be incurred. The amount of the blowing agent to be used can be, for example, 1 part by weight to 100 parts by weight or 1 part by weight to 10 parts by weight, with respect to 100 parts by weight of the resin particles.

In a case where water is used as the blowing agent, water in the dispersion slurry in the vessel can be used as a blowing agent. Specifically, in a case where the water in the dispersion slurry is to be used as the blowing agent,

it is preferable for the resin particles to contain a water absorbing substance in advance. This allows the resin particles to more easily absorb the water in the dispersion slurry in the vessel. As a result, it becomes easier to use the water as the blowing agent.

In the method for producing the present expanded particles, it is preferable to use a dispersion agent. Using a dispersion agent is advantageous in that it is possible to reduce agglomeration (which may hereinafter be referred to as blocking) of resin particles, and to stably produce expanded particles. Examples of the dispersion agent include inorganic substances such as tricalcium phosphate, trimagnesium phosphate, basic magnesium carbonate, calcium carbonate, barium sulfate, kaolin, talc, clay, aluminum oxide, titanium oxide, and aluminum hydroxide. One type of these dispersion agents can be used alone, or two or more types of these can be used in mixture. In a case where two or more dispersion agents are used in mixture, a mixing ratio can be adjusted as appropriate according to a purpose.

An amount of the dispersion agent to be used in a dispersion slurry used in an embodiment of the present invention is preferably 0.01 parts by weight to 3.00 parts by weight, more preferably 0.05 parts by weight to 2.00 parts by weight, and further preferably 0.10 parts by weight to 1.50 parts by weight, with respect to 100 parts by weight of the resin particles. (a) In a case where the amount of the dispersion agent to be used is not less than 0.01 parts by weight, there is no risk of inducing poor dispersion of resin particles. (b) In a case where the amount of the dispersion agent to be used is not more than 3.00 parts by weight, there is no risk of inducing poor fusion between expanded particles during in-mold expansion molding using the obtained expanded particles.

In the method for producing the present expanded particles, it is preferable to use a dispersion auxiliary agent in order to (a) improve an effect of reducing agglomeration of resin particles and/or (b) improve stability of the dispersion slurry in the vessel. Examples of the dispersion auxiliary agent include an anionic surfactant. Examples of the anionic surfactant include sodium alkylbenzene sulfonates (such as sodium dodecylbenzene sulfonate), sodium alkane sulfonates, sodium alkyl sulfonates, sodium alkyl diphenyl ether disulfonates, and sodium $\alpha$-olefin sulfonates. One type of these dispersion auxiliary agents can be used alone, or two or more types of these can be used in mixture. In a case where two or more dispersion auxiliary agents are used in mixture, a mixing ratio can be adjusted as appropriate according to a purpose.

An amount of the dispersion auxiliary agent to be used in the dispersion slurry used in an embodiment of the present invention is preferably 0.001 parts by weight to 0.500 parts by weight, more preferably 0.001 parts by weight to 0.200 parts by weight, and further preferably 0.010 parts by weight to 0.200 parts by weight, with respect to 100 parts by weight of the resin particles. In a case where the amount of the dispersion auxiliary agent to be used falls within the above range, there is no risk of inducing poor dispersion of the resin particles.

A decrease in the stability of the dispersion slurry may result in a plurality of resin particles agglomerating or forming lumps in the vessel. This may result in, for example, (i) production of agglomerated expanded particles, (ii) an inability to produce expanded particles due to lumps of the resin particles remaining in the vessel, or (iii) a decrease in productivity during production of expanded particles.

(Temperature-increasing and pressure-increasing step and maintaining step)

It is preferable that the present production method further includes, after the dispersion step and before the releasing step: (i) a temperature-increasing and pressure-increasing step of increasing an internal temperature of the vessel to a certain temperature and increasing an internal pressure of the vessel to a certain pressure and (ii) a maintaining step of maintaining the internal temperature and the internal pressure of the vessel at the certain temperature and the certain pressure. The maintaining step is preferably carried out after the temperature-increasing and pressure-increasing step. In the present specification, (a) the certain temperature in the temperature-increasing and pressure-increasing step and the maintaining step may be referred to as an expansion temperature and (b) the certain pressure in the temperature-increasing and pressure-increasing step and the maintaining step may be referred to as an expansion pressure.

The expansion temperature cannot be specified definitely because the expansion temperature varies depending on, for example, types of the polypropylene-based resin (A), the hydrophilic substance (B), the hindered amine (C), and a type of the blowing agent which are contained in the resin particles. (i) The expansion temperature is preferably in a range of 20.0°C below to 20.0°C above the melting point of (a) a mixture of the polypropylene-based resin (A), the hydrophilic substance (B), and/or the hindered amine (C), (b) the polypropylene-based resin composition, or (c) the resin particles. (ii) The expansion temperature is more preferably in a range of 10.0°C below to 15.0°C above the melting point of (a) the mixture of the polypropylene-based resin (A), the hydrophilic substance (B), and/or the hindered amine (C), (b) the polypropylene-based resin composition, or (c) the resin particles. (iii) The expansion temperature is further preferably in the range of 5.0°C below to 13.0°C above the melting point of (a) the mixture of the polypropylene-based resin (A), the hydrophilic substance (B), and/or the hindered amine (C), (b) the polypropylene-based resin composition, or (c) the resin particles.

The expansion pressure is preferably 0.5 MPa (gage pressure) to 10.0 MPa (gage pressure), more preferably

0.6 MPa (gage pressure) to 5.0 MPa (gage pressure), and more preferably 0.6 MPa (gage pressure) to 2.5 MPa (gage pressure). With an expansion pressure of not less than 0.5 MPa (gage pressure), it is possible to obtain expanded particles having suitable density.

It can also be said that the maintaining step is a step of maintaining the dispersion slurry in the vessel at the expansion temperature and the expansion pressure. The expansion temperature and the expansion pressure maintained in the maintaining step do not need to be strict values, provided that the values fall within certain acceptable ranges from the viewpoints of a production cost and a technique. In other words, it can also be said that the maintaining step is a step of maintaining the dispersion slurry inside the vessel at around the expansion temperature and around the expansion pressure.

The present production method preferably includes a dispersion step, a maintaining step, and a releasing step. A preferable aspect of the present production method can be the following configuration: A method for producing polypropylene-based expanded particles, the method including: a dispersion step of dispersing polypropylene-based resin particles, an aqueous dispersion medium, and a blowing agent in a vessel; a step of maintaining, at an expansion temperature and an expansion pressure, a dispersion slurry which has been obtained in the dispersion step; and a releasing step of releasing the dispersion slurry to a region having a pressure lower than an internal pressure of the vessel.

In the maintaining step, a period of time (maintaining time) for which the dispersion slurry in the vessel is maintained at (around) the expansion temperature and at (around) the expansion pressure is not particularly limited. The maintaining time is preferably 5 minutes to 60 minutes, more preferably 10 minutes to 60 minutes, more preferably 12 minutes to 50 minutes, more preferably 15 minutes to 40 minutes, further preferably 15 minutes to 30 minutes. In a case where the maintaining time is not less than 5 minutes, there is a sufficient amount of unmelted crystals (crystals of the polypropylene-based resin). This brings about an advantage of being able to reduce shrinkage of resulting expanded particles and/or an increase in open cell ratio. Meanwhile, in a case where the maintaining time is not more than 60 minutes, there is no excessive amount of unmelted crystals. This brings about an advantage of being able to mold expanded particles at a low molding temperature.

The maintaining time can affect a moisture content of resulting expanded particles. In other words, it is possible to adjust the moisture content of the expanded particles by adjusting the maintaining time. For example, as the maintaining time becomes shorter, the moisture content of the expanded particles obtained tends to be decreased. As the maintaining time becomes longer, the moisture content of the expanded particles obtained tends to be increased. In a case where the maintaining time falls within the above range, it is possible to bring about an advantage of easily obtaining expanded particles having a moisture content of 1.0% to 60%.

(Releasing step)

(a) In a case where the temperature-increasing and pressure-increasing step is carried out but the maintaining step is not carried out, the releasing step is preferably carried out after the temperature-increasing and pressure-increasing step. (b) In a case where the temperature-increasing and pressure-increasing step and the maintaining step are both carried out, the releasing step is preferably carried out after the maintaining step. The releasing step makes it possible to expand the resin particles, and as a result, expanded particles are obtained. It can also be said that the releasing step is a step of releasing one end of the vessel so as to release the dispersion slurry inside the vessel into a region (space) having a pressure lower than the expansion pressure (i.e., the internal pressure of the vessel).

In the releasing step, a "region having a pressure lower than the expansion pressure" is intended to mean a "region under a pressure lower than the expansion pressure" or a "space under a pressure lower than the expansion pressure", and can also be described as "in an atmosphere having a pressure lower than the expansion pressure". The region having a pressure lower than the expansion pressure is not particularly limited, provided that the pressure is lower than the expansion pressure. The region having a pressure lower than the expansion pressure can be, for example, a region under atmospheric pressure.

In a case where, in the releasing step, the dispersion slurry is released into a region having a pressure lower than the expansion pressure, it is also possible to release the dispersion slurry through an orifice measuring 1 mm to 5 mm in diameter for the purpose of, for example, adjusting a flow rate of the dispersion slurry and reducing variance in expansion rate of resulting expanded particles. The low-pressure region (space) can be filled with saturated steam for the purpose of improving the expansion property.

(Expansion step)

The steps from the dispersion step to the releasing step can be referred to as an expansion step. In addition, a process of producing expanded particles from resin particles in this manner will be referred to as a "first-step expansion process," and the expanded particles thus obtained will be referred to as "first-step expanded particles".

(Second-step expansion process)

In order to obtain expanded particles having a high expansion rate, it is possible to employ a method in which a large amount of inorganic blowing agent is used during the first-step expansion process (this method will be hereinafter referred to as "Method 1"). Examples of methods other than Method 1 which can be used include a method in which expanded particles (first-step expanded particles) having a relatively low expansion rate (an expansion rate of approximately 2.0 to 35.0 times) are obtained in the first-step expansion process, and after that, the obtained first-step expanded particles are expanded again to increase the expansion rate (this method is hereinafter referred to as "Method 2").

Examples of Method 2 include a method including the following processes (a1) through (a3) which are carried out in this order: (a1) in a first-step expansion process, first-step expanded particles having an expansion rate of 2.0 to 35.0 times are produced; (a2) the first-step expanded particles are placed into a pressure-resistant vessel, and a pressure inside the first-step expanded particles (hereinafter, also referred to as "internal pressure") is increased to greater than normal pressure by carrying out a pressurization treatment at 0.2 MPa (gage pressure) to 0.6 MPa (gage pressure) with use of nitrogen, air, carbon dioxide, or the like; and (a3) then, the first-step expanded particles whose internal pressure has been increased are further expanded by heating with steam or the like. The step of increasing the expansion rate of first-step expanded particles as in Method 2 is referred to here as a "second-step expansion process", and the polypropylene-based resin expanded particles obtained through Method 2 are referred to as "second-step expanded particles".

In the process (a3) of the second-step expansion process, the pressure of the steam for heating the first-step expanded particles is preferably adjusted to a range of 0.03 MPa (gage pressure) to 0.20 MPa (gage pressure), while taking into consideration the expansion rate of the second-step expanded particles. In a case where the pressure of the steam in the second-step expansion process is not lower than 0.03 MPa (gage pressure), there is a tendency that the expansion rate is likely to improve. In a case where the pressure of the steam in the second-step expansion process is not higher than 0.20 MPa (gage pressure), a possibility that resulting second-step expanded particles will agglomerate decreases. Note that, in a case where the second-step expanded particles agglomerate, resulting second-step expanded particles may not be subjected to subsequent in-mold expansion molding.

The internal pressure obtained by impregnating the first-step expanded particles with nitrogen, air, carbon dioxide, or the like is preferably adjusted as appropriate while taking into consideration the expansion rate of the second-step expanded particles and the steam pressure in the second-step expansion process. The internal pressure of the first-step expanded particles is preferably 0.15 MPa (absolute pressure) to 0.60 MPa (absolute pressure), more preferably 0.20 MPa (absolute pressure) to 0.60 MPa (absolute pressure), and further preferably 0.30 MPa (absolute pressure) to 0.60 MPa (absolute pressure). In a case where the internal pressure of the first-step expanded particles is not less than 0.15 MPa (absolute pressure), steam having high pressure is not needed to improve the expansion rate. This reduces a possibility that the second-step expanded particles will agglomerate. In a case where the internal pressure of the first-step expanded particles is not more than 0.6 MPa (absolute pressure), a possibility that the second-step expanded particles will become open-cell foam decreases. This reduces a possibility of a decrease in rigidity (such as compressive strength) of an in-mold expanded product which is ultimately obtained. Note that becoming open-cell foam can also be described as having cells in communication with each other.

(Drying step)

The present production method can further include a drying step of drying the expanded particles. In the drying step, expanded particles to be dried can be expanded particles (first-step expanded particles) obtained in the releasing step (expansion step) or can be second-step expanded particles obtained in the second-step expansion process.

A temperature of the drying (drying temperature), a drying time, and a drying method in the drying step are identical with those described in the section of <Drying>. Therefore, the descriptions thereof are applied, and explanations are omitted here.

[4. Polypropylene-based in-mold expanded product]

The polypropylene-based in-mold expanded product in accordance with an embodiment of the present invention is an in-mold expanded product obtained by molding (e.g., in-mold expansion molding) of the present expanded particles. In the present specification, the "polypropylene-based in-mold expanded product in accordance with an embodiment of the present invention" may be referred to as a "present in-mold expanded product". It can also be said that the present in-mold expanded product is an in-mold expanded product obtained by molding polypropylene-based expanded particles having a moisture content of 1.0% to not more than 60.0%.

The present in-mold expanded product has the above configuration, and therefore can be produced with excellent surface appearance and with good productivity.

(Surface appearance of in-mold expanded product)

In the present specification, the "surface appearance" of the in-mold expanded product can be evaluated based on surface smoothness and edge smoothness of the in-mold expanded product. Excellent surface smoothness of the in-mold expanded product means that there is little space between particles on the surface of the in-mold expanded product (little space (gap) between expanded particles constituting the in-mold expanded product), that is, the surface of the molded product has little unevenness. Excellent edge smoothness of the in-mold expanded product means that there is almost no space between particles in an edge part (corner part) of the molded product, that is, there is almost no unevenness (no missing particles) at the edge part of the in-mold expanded product. In the present specification, an in-mold expanded product "having excellent surface appearance" is intended to mean an in-mold expanded product having excellent surface smoothness and excellent edge smoothness. The surface smoothness and the edge smoothness of the in-mold expanded product can be evaluated by methods described in Examples.

(Density of in-mold expanded product)

A density of the present in-mold expanded product is preferably 15.0 g/L to 400.0 g/L, preferably 50.0 g/L to 300.0 g/L, and preferably 100.0 g/L to 200.0 g/L. A density of not less than 15.0 g/L of an in-mold expanded product brings about an advantage of obtaining an in-mold expanded product that has smoothness and no sink marks on the surface thereof and is excellent in surface appearance. A density of not more than 400.0 g/L makes it possible to obtain an in-mold expanded product that is sufficiently reduced in weight.
Note that, in the present specification, the density of the in-mold expanded product is measured in accordance with the following processes (1) to (3): (1) a length (mm) in the length direction, a length (mm) in the width direction, and a length (mm) in the thickness direction of the in-mold expanded product are measured and a volume V (L) of the in-mold expanded product is calculated; (2) a weight W (g) of the in-mold expanded product is measured; and (3) a density of the in-mold expanded product is calculated on the basis of the following formula:

$$\text{Density of in-mold expanded product (g/L)} = W/V.$$

(Flame retardancy of in-mold expanded product)

The present in-mold expanded product is preferably an in-mold expanded product having excellent flame retardancy in order that the present in-mold expanded product can be suitably used as a member that is demanded to have high flame retardancy, such as a peripheral member of an electric component. In the present specification, the flame retardancy of the in-mold expanded product can be evaluated by the UL94V "vertical burning expanded material test". A test method for the UL94V "vertical burning expanded material test" will be described later in detail in Examples.
In the UL94V "vertical burning expanded material test", the flame retardancy of the in-mold expanded product is evaluated at four grades (V-0, V-1, V-2, and NG, which are in descending order of excellence in flame retardancy). The present in-mold expanded product preferably satisfies at least the grade V-2, more preferably satisfies the grade V-1, and particularly preferably satisfies the grade V-0.
In the UL94V test, a thickness of the in-mold expanded product is one of factors affecting evaluation results. As the thickness of the in-mold expanded product becomes smaller, a ratio of a surface area to a volume of the in-mold expanded product increases. Therefore, the grade of flame retardancy tends to be deteriorated for reasons such as an increase in a ratio of a burning area at the time of burning. In other words, an in-mold expanded product that satisfies a grade of excellent flame retardancy even under a condition where the thickness of the in-mold expanded product is small (e.g., 8 mm or 5 mm) can be said to be an in-mold expanded product that has superior flame retardancy.
Therefore, from the viewpoint of providing an in-mold expanded product having superior flame retardancy, in the UL94V test, the present in-mold expanded product preferably satisfies the grade V-0 in a case where the thickness of the in-mold expanded product (test sample) is 13 mm and 8 mm and satisfies the grade V-2 in a case where the thickness of the in-mold expanded product is 5 mm, more preferably satisfies the grade V-0 in a case where the thickness of the in-mold expanded product is 13 mm and 8 mm and satisfies the grade V-1 in a case where the thickness of the in-mold expanded product is 5 mm, and particularly preferably satisfies the grade V-0 in all cases where the thickness of the in-mold expanded product is 13 mm, 8 mm, and 5 mm.
The density of the in-mold expanded product is also one of the factors affecting test results of the UL94V test. As the density of the in-mold expanded product becomes smaller, an amount of components derived from the expanded particles (present expanded particles), which are a raw material, contained in the in-mold expanded product is decreased. Therefore, a test result of the UL94V test of the in-mold expanded product tends to be deteriorated for reasons that it is difficult to enjoy a flame retardancy-enhancing effect caused by components (e.g., hydrophilic substance (B) and/or

hindered amine (C)) that are contained in the present expanded particles and contribute to flame retardancy, and the like. Therefore, it is not possible to simply compare test results of the UL94V test between in-mold expanded products having largely different densities. Therefore, the "excellent flame retardancy" of the present in-mold expanded product is intended to mean to have superior flame retardancy, as compared with an in-mold expanded product having an equivalent density (i.e., an in-mold expanded product that does not satisfy an embodiment of the present invention).

<Method for producing in-mold expanded product>

The method for producing the present in-mold expanded product includes a step of molding the present expanded particles. It can also be said that the method for producing the present in-mold expanded product is a method including a step of molding polypropylene-based expanded particles having a moisture content of 1.0% to not more than 60.0%. The method for producing the present in-mold expanded product is not particularly limited in terms of the other aspects, provided that the above feature is satisfied. A molding method for obtaining the present in-mold expanded product is preferably an in-mold expansion molding method that includes a step of filling a mold with polypropylene-based expanded particles and heating, with steam, the polypropylene-based expanded particles in the mold so as to mold the polypropylene-based expanded particles. Specific example aspects of the method for producing the present in-mold expanded product by the in-mold expansion molding method include, but are not limited to, a production method that includes the following processes (b1) through (b6) in this order:

(b1) a mold constituted by a stationary mold that cannot be driven and a movable mold that can be driven is mounted on an in-mold expansion molding machine, where the stationary mold and the movable mold can form a molding space inside the stationary mold and the movable mold by driving the movable mold toward the stationary mold (this operation may be referred to as "mold closing");
(b2) the movable mold is driven toward the stationary mold so as to form a slight gap (also referred to as "gap in a mold") such that the stationary mold and the movable mold are not completely closed together;
(b3) a molding space formed inside the stationary mold and the movable mold is filled with expanded particles through, for example, a filling machine;
(b4) the movable mold is driven such that the stationary mold and the movable mold are completely closed (i.e., complete mold closing is performed);
(b5) in-mold expansion molding is performed by, after the mold is preheated with steam, subjecting the mold to one-side heating and other-side heating with steam and then subjecting the mold to both-side heating with steam; and
(b6) a resulting in-mold expanded object is taken out from the mold, and is dried (e.g., dried at 75°C) to obtain an in-mold expanded product.

In the process (b1), the mold mounted on the in-mold expansion molding machine can suitably be a mold having a steam vent (core vent).

In the process (b2), a gap formed in the mold (%) is not particularly limited, and is preferably 1% to 30%, preferably 5% to 25%, and preferably 15% to 25%. In a case where the gap in the mold is within the above range, it is possible to bring about an advantage that a molded product having a smooth surface and good appearance is easy to obtain. Noted that, in the present specification, the "gap in the mold" is intended to mean a distance between a movable mold and a stationary mold of a mold in a molding space of the mold during filling of the mold with expanded particles. In other words, the "gap in the mold" is intended to mean a degree of opening width of the mold in a case where an average thickness of a resulting in-mold expanded product (thickness of an in-mold expanded product which is calculated by dividing a volume of the in-mold expanded product by a projection area obtained when the in-mold expanded product is lit in a movable direction of the movable mold) is set to 100%.

Examples of the method for filling the molding space with the expanded particles in the above process (b3) include the following methods (b3-1) through (b3-4):

(b3-1) a method in which the expanded particles (including the above-described second-step expanded particles, the same applies hereinafter) are pressurized with an inorganic gas in a vessel to impregnate the expanded particles with the inorganic gas and impart a predetermined internal pressure (internal-expanded particle pressure), and then the molding space is filled with the expanded particles;
(b3-2) a method in which a mold whose volume can be changed is used, and a molding space is filled with the expanded particles and then an inside volume of the mold is compressed to be reduced by 10% to 75%;
(b3-3) a method in which the expanded particles are compressed with gas pressure and introduced to fill a molding space; and
(b3-4) a method in which a molding space is filled with the expanded particles without any particular pretreatment.

In the method for producing the present in-mold expanded product, the present expanded particles (i.e., polypropylene-based expanded particles having a moisture content of 1.0% to not more than 60.0%) are used. Therefore, in the method for producing the present in-mold expanded product, it is possible to provide an in-mold expanded product having excellent surface appearance even though the method does not include a step of impregnating the expanded particles with an inorganic gas and imparting an internal pressure to the expanded particles unlike the above method (b3-1) or an internal pressure imparted to the expanded particles is low (e.g., not more than 0.25 MPa). As such, it is possible to reduce or eliminate a time for impregnating the expanded particles with air, and this improves productivity (production efficiency) of an in-mold expanded product. That is, the method for producing the present in-mold expanded product preferably includes: no step of impregnating the polypropylene-based expanded particles with an inorganic gas; or a step of impregnating the polypropylene-based expanded particles with an inorganic gas and imparting an internal pressure of more than 0.10 MPa (absolute pressure) and not more than 0.25 MPa (absolute pressure) to the polypropylene-based expanded particles.

In a case where the method for producing the present in-mold expanded product includes a step of impregnating the polypropylene-based expanded particles with an inorganic gas, it is possible to use at least one type selected from the group consisting of air, nitrogen, oxygen, carbon dioxide, helium, neon, argon, and the like as the inorganic gas with which the expanded particles are impregnated. Among these inorganic gases, air and/or carbon dioxide are preferable.

In a case where the method for producing the present in-mold expanded product includes a step of impregnating the polypropylene-based expanded particles with an inorganic gas, the internal pressure imparted to the expanded particles is preferably more than 0.10 MPa (absolute pressure) and not more than 0.25 MPa (absolute pressure), more preferably more than 0.10 MPa (absolute pressure) and not more than 0.20 MPa (absolute pressure), further preferably more than 0.10 MPa (absolute pressure) and not more than 0.18 MPa (absolute pressure), and still further preferably more than 0.10 MPa (absolute pressure) and not more than 0.15 MPa (absolute pressure), from the viewpoint of improving productivity of an in-mold expanded product. Noted that, in general, an internal pressure of expanded particles which have not been impregnated with an inorganic gas (i.e., no internal pressure is imparted) is equivalent to atmospheric pressure (0.10 MPa (absolute pressure)).

In the method for producing the present in-mold expanded product, a temperature in the vessel when impregnating the expanded particles with the inorganic gas is preferably 10°C to 90°C, and more preferably 40°C to 90°C.

In the methods (b3-2) and (b3-3), recovery force of the expanded particles compressed with gas pressure is used in order to fuse the expanded particles in the subsequent process (b5).

In the above process (b5), the "steam pressure in the one-side heating and the other-side heating" is referred to as "steam pressure A", and the "steam pressure in the both-side heating" is referred to as "steam pressure B".

The steam pressure B is not particularly limited, and is preferably 0.20 MPa (gage pressure) to 0.40 MPa (gage pressure), more preferably 0.22 MPa (gage pressure) to 0.38 MPa (gage pressure), and further preferably 0.24 MPa (gage pressure) to 0.36 MPa (gage pressure). According to the configuration, there is a tendency to obtain an in-mold expanded product having a high rate of internal fusion. In particular, the steam pressure A is preferably set to approximately 1/2 of the steam pressure B at the time of in-mold expansion molding. With such a steam pressure A, excessive pressurization is not necessary, which is economically advantageous. In addition, it is possible to provide an in-mold expanded product having a high rate of internal fusion.

An embodiment of the present invention can include the following features.

<1> Polypropylene-based expanded particles having a moisture content of 1.0% to 60.0%.

<2> The polypropylene-based expanded particles described in <1>, in which: a moisture content of the polypropylene-based expanded particles is 1.0% to 60.0% after drying with a dryer and/or at the time of molding.

<3> The polypropylene-based expanded particles described in <1> or <2>, in which: the moisture content is 11.0% to 30.0%.

<4> The polypropylene-based expanded particles described in any one of <1> through <3>, containing: a hydrophilic substance (B).

<5> The polypropylene-based expanded particles described in <4>, in which: the hydrophilic substance (B) is phosphonate.

<6> The polypropylene-based expanded particles described in <4> or <5>, in which: the hydrophilic substance (B) is pentaerythrityl diphosphonate.

<7> The polypropylene-based expanded particles described in any one of <4> through <6>, in which: an amount of the hydrophilic substance (B) contained is more than 0.1% by weight and not more than 20.0% by weight, with respect to 100% by weight as a total amount of the polypropylene-based expanded particles.

<8> The polypropylene-based expanded particles described in any one of <1> through <7>, further containing: a hindered amine (C).

<9> The polypropylene-based expanded particles described in <8>, in which: the hindered amine (C) is a reaction product of 2,4-bis((1-cyclohexyloxy-2,2,6,6-tetramethylpiperidin-4-yl) butylamino)-6-chloro-S-triazine and N,N'-bis(3-aminopropyl)ethylenediamine.

<10> The polypropylene-based expanded particles described in <8> or <9>, in which: an amount of the hindered amine (C) contained is 1.0% by weight to 10.0% by weight, with respect to 100% by weight as a total amount of the polypropylene-based expanded particles.

<11> The polypropylene-based expanded particles described in any one of <1> through <10>, further containing: a polypropylene-based resin (A) in an amount of not less than 70.0% by weight, with respect to 100% by weight as a total amount of the polypropylene-based expanded particles.

<12> The polypropylene-based expanded particles described in <11>, in which: the polypropylene-based resin (A) is an ethylene/propylene random copolymer.

<13> The polypropylene-based expanded particles described in <11> or <12>, in which: a melt index (MI) of the polypropylene-based resin (A) is 3.00 g/ 10 minutes to 30.00 g/ 10 minutes.

<14> The polypropylene-based expanded particles described in any one of <11> through <13>, containing: the hydrophilic substance (B) and the hindered amine (C).

<15> The polypropylene-based expanded particles described in <14>, in which: a ratio of a weight of the hydrophilic substance (B) to a weight of the hindered amine (C) in the polypropylene-based expanded particles is 1.0 to 10.0.

<16> The polypropylene-based expanded particles described in <14> or <15>, in which: a ratio of a weight of the polypropylene-based resin (A) to a total weight of the hydrophilic substance (B) and the hindered amine (C) in the polypropylene-based expanded particles is 1 to 10.

<17> The polypropylene-based expanded particles described in any one of <1> through <16>, in which: a bulk density of the polypropylene-based expanded particles is 15.0 g/L to 400.0 g/L.

<18> The polypropylene-based expanded particles described in any one of <1> through <17>, in which: a temperature of the drying is 40°C to 100°C.

<19> The polypropylene-based expanded particles described in any one of <1> through <18>, in which: a time of the drying is 10 minutes to 20 hours.

<20> The polypropylene-based expanded particles described in any one of <1> through <19>, in which: the drying is hot air drying.

<21> The polypropylene-based expanded particles described in any one of <1> through <20>, in which: the polypropylene-based expanded particles is obtained by expansion polypropylene-based resin particles; and a particle weight of the polypropylene-based resin particles is 0.3 mg/particle to 10.0 mg/particle.

<22> A polypropylene-based in-mold expanded product, which is obtained by in-mold expansion molding of polypropylene-based expanded particles described in any one of <1> through <21>.

<23> The polypropylene-based in-mold expanded product described in <22>, in which: the polypropylene-based in-mold expanded product satisfies a grade V-0 in a UL94V "vertical burning expanded material test".

<24> The polypropylene-based in-mold expanded product described in <22> or <23>, in which: a density of the polypropylene-based in-mold expanded product is 15.0 g/L to 400.0 g/L.

<25> A method for producing a polypropylene-based in-mold expanded product, the method including: a step of carrying out in-mold expansion molding of polypropylene-based expanded particles described in any one of <1> through <21>.

<26> The method described in <25>, further including: a step of molding the polypropylene-based expanded particles by heating, with steam, the polypropylene-based expanded particles with which a mold is filled.

<27> The method described in <25> or <26>, including: no step of impregnating the polypropylene-based expanded particles with an inorganic gas; or a step of impregnating the polypropylene-based expanded particles with an inorganic gas and imparting an internal pressure of more than 0.10 MPa (absolute pressure) and not more than 0.25 MPa (absolute pressure) to the polypropylene-based expanded particles.

<28> A method for producing polypropylene-based expanded particles, the method including: a dispersion step of dispersing polypropylene-based resin particles, an aqueous dispersion medium, and a blowing agent in a vessel; a maintaining step of maintaining, at an expansion temperature and an expansion pressure, a dispersion slurry which has been obtained in the dispersion step; and a releasing step of releasing the dispersion slurry to a region having a pressure lower than an internal pressure of the vessel.

<29> The method described in <28>, in which: a particle weight of the polypropylene-based resin particles is 0.3 mg/particle to 10.0 mg/particle.

<30> The method described in <28> or <29>, in which: a maintaining time in the maintaining step is 5 minutes to 60 minutes.

<31> The method described in any one of <28> through <30>, further including: a drying step of drying the polypropylene-based expanded particles which have been obtained in the releasing step.

<32> The method described in any one of <28> through <31>, in which: a drying temperature in the drying step is 40°C to 100°C.

<33> The method described in any one of <28> through <32>, in which: a drying time in the drying step is 10 minutes

to 20 hours.
<34> The method described in any one of <28> through <33>, in which: the drying in the drying step is hot air drying.

The present invention is not limited to the embodiments, but can be altered by a skilled person in the art within the scope of the claims. The present invention also encompasses, in its technical scope, any embodiment derived by combining technical means disclosed in differing embodiments.

Examples

The following description will specifically discuss the present invention through Examples. However, the technical scope of the present invention is not limited to these Examples.

[Materials]

The substances used in Examples and Comparative Examples are described below.

<Polypropylene-based resin (A)>

Polypropylene (A): ethylene random polypropylene (ethylene/propylene random copolymer); MI of 7.00 g/10 minutes; melting point of 144°C; and ethylene content of 3.2%

<Hydrophilic substance (B)>

AFLAMMIT (registered trademark) PCO900 (pentaerythrityl diphosphonate) manufactured by Thor GmbH

<Hindered amine (C)>

FLAMESTAB (registered trademark) NOR116 manufactured by BASF (a reaction product of 2,4-bis((1-cyclohexyloxy-2,2,6,6-tetramethylpiperidin-4-yl)butylamino)-6-chloro-S-triazine and N,N'-bis(3-aminopropyl)ethylenediamine).

<Other additives>

(Nucleating agent)

Talcan Powder PK-S manufactured by Hayashi-Kasei Co., Ltd.

(Antioxidant)

Irgafos168 manufactured by BASF
Irganox1010 manufactured by BASF

(UV-ray inhibitor)

Tinuvin622 manufactured by BASF

<Blowing agent>

Carbon dioxide manufactured by Air Water Inc.

<Dispersion agent>

Kaolin ASP-170 manufactured by BASF
Tricalcium phosphate manufactured by Taihei Chemical Industrial Co., Ltd.

<Dispersion auxiliary agent>

DBS G-15 manufactured by Kao Corporation

The dispersion agent and the dispersion auxiliary agent are added to a dispersion slurry or to a pressure-resistant closed vessel in the dispersion step described later. Therefore, the dispersion agent and the dispersion auxiliary agent are not present in resin particles or expanded particles or only remain in very small amounts. Furthermore, carbon dioxide used as a blowing agent is diffused from resulting expanded particles because the expanded particles have high gas permeability.

[Measurement method]

An evaluation method carried out in Examples and Comparative Examples will be described below.

(MI of polypropylene-based resin (A) and MI of resin particles)

MI of the polypropylene-based resin (A) and MI of resin particles were each measured with use of an MI measurement device as specified in JIS K7210: 1999, under the following conditions: orifice diameter φ of 2.0959 mm±0.005 mm; orifice length of 8.000 mm±0.025 mm; a load of 2160 g; and temperature of 230±0.2°C.

(Melting point of resin particles)

A melting point of the resin particles was measured using a differential scanning calorimeter (DSC6200 type manufactured by Seiko Instruments Inc.). Specific measurement method was as in the following processes (1) through (3): (1) a temperature of 5 mg to 6 mg of the resin particles was increased from 40.0°C to 220.0°C at a temperature increase rate of 10.0°C/min so that the resin particles were melted; (2) after that, the temperature of the melted resin particles was decreased from 220.0°C to 40.0°C at a temperature decrease rate of 10.0°C/min so that the resin particles were crystallized; and (3) then, the temperature of the crystallized resin particles was increased from 40.0°C to 220.0°C at a temperature increase rate of 10°C/min. A temperature at a peak (melting peak) in a DSC curve of the resin particles which DSC curve was obtained in the second temperature increase (i.e., in the process (3)) was regarded as the melting point of the resin particles. Note that, in a case where a plurality of peaks (melting peaks) were present in the DSC curve of the resin particles obtained during the second temperature increase by the above-described method, a temperature at a peak (melting peak) having the greatest melting heat quantity was regarded as the melting point of the resin particles.

(Measurement of average cell diameter of expanded particles)

The method for measuring the average cell diameter of the expanded particles was carried out as in the following processes (1) through (5): (1) an expanded particle was cut at the center thereof with use of a razor (a high stainless steel double-beveled blade manufactured by FEATHER Safety Razor Co., Ltd.); (2) then, a resulting cross section of the expanded particle was observed with use of an optical microscope (VHX-5000 manufactured by Keyence Corporation) at a magnification of 50 times; (3) in an image obtained by the observation, a straight line was drawn through the center or substantially center of the cross section of the expanded particle; (4) (4-1) the number (n) of cells present on the straight line was counted, and (4-2) a length of a line segment cut from the straight line at intersections of the straight line and the surface of the expanded particle was measured and regarded as a diameter L of the expanded particle; and (5) the average cell diameter of expanded particles was calculated by the following formula:

$$\text{Average cell diameter } (\mu m) = L/n.$$

(High temperature-side melting heat quantity of expanded particles)

A high temperature-side melting heat quantity of the expanded particles was measured by the following processes (1) through (5): (1) approximately 5 mg of the expanded particles was measured out; (2) a temperature of the expanded particles thus measured out was increased from 10°C to 190°C at a temperature increase rate of 10°C/minute, so that the expanded particles were melted; (3) in a DSC curve of the expanded particles obtained in the process (2), a baseline was created by connecting, with a straight line, a point representing a temperature before the start of melting and a point representing a temperature after the end of the melting; (4) a straight line which passes through a maximum point between a melting peak on the high-temperature side or a melting peak at the highest temperature and an adjacent melting peak was drawn perpendicularly to the X-axis; and (5) a quantity of heat (J/g) calculated from the high-temperature

side region enclosed by the baseline, the straight line passing through the maximum point, and the DSC curve was regarded as the high temperature-side melting heat quantity of the expanded particles.

(Density (bulk density) of expanded particles)

A method for measuring a density (bulk density) of the expanded particles included the following processes (1) through (3): (1) the expanded particles were introduced into a vessel having a volume V ($cm^3$) until the expanded particles overflowed from the vessel; (2) the top particles (upper surface) of the vessel were leveled off, and a weight W (g) of the expanded particles in the vessel was measured; and (3) the bulk density of the expanded particles was calculated by the following formula: Bulk density (g/L) of expanded particles = weight W (g) of expanded particles/{volume V ($cm^3$) of vessel/ 1000}.

(Moisture content of expanded particles)

A method for measuring the moisture content of the expanded particles (expanded particles immediately after expansion, expanded particles after drying with a dryer, and expanded particles at the time of molding) included the following processes (1) through (4). (1) Water attached to the surface of the expanded particles was dehydrated by air (compressed air) flow until there was no temperature change in the air flow due to an effect of latent heat of vaporization generated in association with the dehydration of the expanded particles; (2) the expanded particles were left to stand in a room under normal temperature and normal pressure for 30 minutes, and then a weight (W1) of the expanded particles was measured; (3) the expanded particles were further dried in an oven at 150°C for 1 hour, and a weight (W2) of the expanded particles at that time was measured; and (4) the moisture content of the expanded particles was calculated by the following formula:

$$\text{Moisture content (\%)} = (W1-W2)/W2 \times 100.$$

(Density of in-mold expanded product)

A density of the in-mold expanded product (in-mold expanded product density) was measured as described in the following processes (1) through (3): (1) a length (mm) in the length direction, a length (mm) in the width direction, and a length (mm) in the thickness direction of the in-mold expanded product were measured and a volume V (L) of the in-mold expanded product was calculated; (2) a weight W (g) of the in-mold expanded product was measured; and (3) the density of the in-mold expanded product was calculated on the basis of the following formula:

$$\text{Density of in-mold expanded product (g/L)} = W/V.$$

(Surface smoothness of in-mold expanded product)

A method for evaluating the surface smoothness of the in-mold expanded product included the following processes (1) and (2): (1) in the in-mold expanded product, the number of spaces having a size of not less than 1 $mm^2$ between particles included in an arbitrary range of 50 mm × 50 mm on the surface of the in-mold expanded product was counted; and (2) based on the counted number of spaces between particles, the surface smoothness of the in-mold expanded product was evaluated in accordance with the following criteria:

5.0 (particularly good): The number of spaces having a size of not less than 1 $mm^2$ between particles is less than five 4.5 (better): The number of spaces having a size of not less than 1 $mm^2$ between particles is five or more and less than seven

4.0 (good): The number of spaces having a size of not less than 1 $mm^2$ between particles is seven or more and less than 10

3.5 (slightly good): The number of spaces having a size of not less than 1 $mm^2$ between particles is 10 or more and less than 17

3.0 (acceptable): The number of spaces having a size of not less than 1 $mm^2$ between particles is 17 or more and less than 25

2.5 (unacceptable): The number of spaces having a size of not less than 1 $mm^2$ between particles is 25 or more and less than 37

2.0 (slightly poor): The number of spaces having a size of not less than 1 $mm^2$ between particles is 37 or more and

less than 50
1.0 (poor): The number of spaces having a size of not less than 1 $mm^2$ between particles is 50 or more

(Edge smoothness of in-mold expanded product)

A method for evaluating the edge smoothness of the in-mold expanded product included the following processes (1) and (2): (1) in the in-mold expanded product, the number of spaces having a size of not less than 1 $mm^2$ between particles included in a range of an edge part of the in-mold expanded product was counted, and an edge shape was visually confirmed; and (2) based on the counted number of spaces between particles and the confirmed edge shape, the edge smoothness of the in-mold expanded product was evaluated in accordance with the following criteria:

5 (particularly good): a state in which no spaces are present between particles, and the edge shape is extremely good and excellent
4 (good): a state in which few spaces are present between particles, and the edge shape is good
3 (acceptable): a small number of spaces are seen between particles but no missing particles are seen in the edge part 2 (slightly poor): a state in which there is unevenness in the edge part because there are spaces between particles and there are also missing particles
1 (poor): a state in which there are many spaces between particles and many missing particles, and the edge is uneven.

(Flame retardancy of in-mold expanded product)

The flame retardancy of the in-mold expanded product was measured and evaluated by the UL94V "vertical burning test".

(UL94V "vertical burning test")

The test method in UL94V "vertical burning test" included the following operations (1) through (5): (1) a sample having specific dimensions (length of 125±5 mm × width of 13±0.5 mm) and a specific thickness (thickness (t) of the test sample = 13 mm, 8 mm, or 5 mm) was cut our from the in-mold expanded product; (2) the sample thus cut out was fixed at the upper part thereof with use of a fixing clamp, the test sample was held vertically, and absorbent cotton was placed immediately below the test sample; (2) flame of a gas burner was brought into contact, for 10 seconds, with the bottom end of the test sample being held, so as to burn the test sample (first burning); (3) the burning time and the red-hot time of the test sample were measured, and if the burning of the test sample stopped within 30 seconds, the flame of the gas burner was brought into contact with the bottom end of the test sample again for 10 seconds to burn the test sample (second burning); (4) the burning time and the red-hot time of the test sample were measured again; and (5) the operations (1) through (4) were repeated five times in total using different samples, and the flame retardancy was evaluated in accordance with the evaluation criteria below.

Evaluation criteria

[Unacceptable (no-good)]: During the first burning or the second burning, the samples continued to burn for not less than 30 seconds or some samples burned to the position of the fixing clamp.

[V-2]: No samples continued to burn for not less than 30 seconds after the first contact burning,

the sum of the burning times after the total of 10 times of contact burning of five samples was not more than 250 seconds,
no samples burned to the position of the fixing clamp,
after the second contact burning, there was no sample for which the sum of the burning time and the red-hot time was not less than 250 seconds, and
there was/were a sample(s) whose particles that fell during the burning caused the absorbent cotton placed below the test sample to combust.

[V-1]: No samples continued to burn for not less than 30 seconds after the first contact burning or the second contact burning,

the sum of the burning times after the total of 10 times of contact burning of five samples was not more than

250 seconds,
no samples burned to the position of the fixing clamp,
after the second contact burning, there was no sample for which the sum of the burning time and the red-hot time was not less than 250 seconds, and
there was no sample whose particles that fell during any burning caused the absorbent cotton placed below the test sample to combust.

[V-0]: No samples continued to burn for not less than 10 seconds after both the first contact burning and the second contact burning,

the sum of the burning times after the total of 10 times of contact burning of five samples was not more than 50 seconds,
no samples burned to the position of the fixing clamp,
after the second contact burning, there was no sample for which the sum of the burning time and the red-hot time was not less than 30 seconds, and
there was no sample whose particles that fell during any burning caused the absorbent cotton placed below the test sample to combust.

[Example 1]

(Preparation of polypropylene-based resin particles)

Components were dry-blended such that, in 100% by weight of a blended product, the polypropylene-based resin (A) accounted for 79.6% by weight, the hydrophilic substance (B) accounted for 15.0% by weight, the hindered amine (C) accounted for 5.0% by weight and, as other additives, Talcan Powder PK-S, which is a nucleating agent, accounted for 0.10% by weight, Irgafosl68, which is an antioxidant, accounted for 0.133% by weight, Irganox1010, which is an antioxidant, accounted for 0.067% by weight, and Tinuvin622, which is a UV-ray inhibitor, accounted for 0.10% by weight (where the total amount of these other additives was 0.4% by weight).

The resulting blended product was introduced into a twin-screw extruder "TEM26SX manufactured by Shibaura Machine Co., Ltd.", and was melted and kneaded at a resin temperature of 220°C. The melted and kneaded polypropylene-based resin composition was extruded in a strand form through a die that was attached to the tip of the extruder and had a circular hole. The extruded polypropylene-based resin composition was cooled with water, and then cut with a cutter so that a weight per particle of resin particles was 1.2 mg, and thus resin particles were obtained (granulation step).

(Preparation of polypropylene-based expanded particles)

Into a pressure-resistant closed vessel, 100 parts by weight of the resin particles thus obtained, 442 parts by weight of pure water, 1.1 parts by weight of tricalcium phosphate as a dispersion agent, 0.22 parts by weight of Kaolin ASP-170 as a dispersion agent, and 0.027 parts by weight of DBS as a dispersion auxiliary agent were introduced. After that, 1.8 parts by weight of carbon dioxide as a blowing agent was introduced into the pressure-resistant closed vessel while the raw materials in the pressure-resistant closed vessel were being stirred, so that a dispersion slurry was prepared (dispersion step). Next, the temperature inside the pressure-resistant closed vessel was increased by heating to an expansion temperature of 150.8°C. Subsequently, carbon dioxide was additionally injected into the pressure-resistant closed vessel, and the pressure in the pressure-resistant closed vessel was raised to an expansion pressure of 0.7 MPa (gage pressure) (temperature-increasing and pressure-increasing step). Next, the inside of the pressure-resistant closed vessel was maintained at the expansion temperature and expansion pressure for 20 minutes (maintaining step), and then a valve provided at the lower part of the closed vessel was opened so that the dispersion slurry was released through an orifice having an opening diameter of 3.6 mm into an expansion cylinder under atmospheric pressure. Thus, expanded particles (first-step expanded particles) were obtained (releasing step). At this time, carbon dioxide was additionally injected into the pressure-resistant closed vessel so that the pressure inside the pressure-resistant closed vessel was not reduced from the expansion pressure during the release of the dispersion slurry, and the internal pressure of the pressure-resistant closed vessel was maintained at 0.7 MPa (gage pressure). The average cell diameter, the high temperature-side melting heat quantity, and the moisture content immediately after expansion of the expanded particles thus obtained were measured. The results are shown in Table 1. The expanded particles thus obtained contained the hydrophilic substance (B) in an amount of 15.0% by weight and the hindered amine (C) in an amount of 5.0% by weight, with respect to 100% by weight as a total amount of the expanded particles.

(Preparation of polypropylene-based in-mold expanded product)

The expanded particles thus obtained were dried for 120 minutes in a dryer (KF-2000, manufactured by KOHKI INCORPORATION) at 80°C, so that the moisture content of the expanded particles (this can also be said to be a moisture content after drying with a dryer and a moisture content at the time of molding) was adjusted to 28.0%. After that, the expanded particles were introduced into a pressure-resistant closed vessel. Air was introduced into the pressure-resistant closed vessel, and the expanded particles in the pressure-resistant closed vessel were impregnated with pressurized air, so that an internal-expanded particle pressure (absolute pressure) of 0.16 MPa (absolute pressure) was imparted to the expanded particles. The expanded particles impregnated with air were heat-molded using a molding machine (polypropylene in-mold expansion molding machine manufactured by DAISEN Co., Ltd.) with steam at 0.26 MPa (gage pressure) with a gap in a mold of 20%, so that an in-mold expanded product was obtained. The in-mold expanded product obtained was left at room temperature for 1 hour, then cured and dried at 75°C for 12 hours in a thermostatic chamber, and then left at room temperature for 4 hours again. After that, the density of the obtained in-mold expanded product was measured by the foregoing method, and the surface smoothness and the edge smoothness were evaluated. The results are shown in Table 1.

[Example 2]

Resin particles, expanded particles, and an in-mold expanded product were obtained by methods similar to those of Example 1, except that the steam pressure at the time of heat-molding the expanded particles was changed to 0.30 MPa (gage pressure). Then, physical properties thereof were measured and evaluated. The results are shown in Table 1.

[Example 3]

Resin particles, expanded particles, and an in-mold expanded product were obtained by methods similar to those of Example 1, except that the steam pressure at the time of heat-molding the expanded particles was changed to 0.34 MPa (gage pressure). Then, physical properties thereof were measured and evaluated. The results are shown in Table 1.

[Example 4]

Resin particles, expanded particles, and an in-mold expanded product were obtained by methods similar to those of Example 1, except that no internal pressure (internal-expanded particle pressure) was imparted to the expanded particles before molding. Then, physical properties thereof were measured and evaluated. The results are shown in Table 1.

[Example 5]

Resin particles, expanded particles, and an in-mold expanded product were obtained by methods similar to those of Example 2, except that no internal pressure (internal-expanded particle pressure) was imparted to the expanded particles before molding. Then, physical properties thereof were measured and evaluated. The results are shown in Table 1.

[Example 6]

(Preparation of polypropylene-based resin particles)

Components were dry-blended such that, in 100% by weight of a blended product, the polypropylene-based resin (A) accounted for 79.6% by weight, the hydrophilic substance (B) accounted for 15.0% by weight, the hindered amine (C) accounted for 5.0% by weight and, as other additives, Talcan Powder PK-S, which is a nucleating agent, accounted for 0.10% by weight, Irgafosl68, which is an antioxidant, accounted for 0.133% by weight, Irganox1010, which is an antioxidant, accounted for 0.067% by weight, and Tinuvin622, which is a UV-ray inhibitor, accounted for 0.10% by weight (where the total amount of these other additives was 0.4% by weight).

The resulting blended product was introduced into a twin-screw extruder "TEM26SX manufactured by Shibaura Machine Co., Ltd.", and was melted and kneaded at a resin temperature of 220°C. The melted and kneaded polypropylene-based resin composition was extruded in a strand form through a die that was attached to the tip of the extruder and had a circular hole. The extruded polypropylene-based resin composition was cooled with water, and then cut with a

cutter so that a weight per particle of resin particles was 5.0 mg, and thus resin particles were obtained (granulation step).

(Preparation of polypropylene-based expanded particles)

Into a pressure-resistant closed vessel, 100 parts by weight of the resin particles thus obtained, 442 parts by weight of pure water, 1.1 parts by weight of tricalcium phosphate as a dispersion agent, 0.15 parts by weight of Kaolin ASP-170 as a dispersion agent, and 0.027 parts by weight of DBS as a dispersion auxiliary agent were introduced. After that, 2.5 parts by weight of carbon dioxide as a blowing agent was introduced into the pressure-resistant closed vessel while the raw materials in the pressure-resistant closed vessel were being stirred, so that a dispersion slurry was prepared (dispersion step). Next, the temperature inside the pressure-resistant closed vessel was increased by heating to an expansion temperature of 150.9°C. Subsequently, carbon dioxide was additionally injected into the pressure-resistant closed vessel, and the pressure in the pressure-resistant closed vessel was raised to an expansion pressure of 0.9 MPa (gage pressure) (temperature-increasing and pressure-increasing step). Next, the inside of the pressure-resistant closed vessel was maintained at the expansion temperature and expansion pressure for 10 minutes (maintaining step), and then a valve provided at the lower part of the closed vessel was opened so that the dispersion slurry was released through an orifice having an opening diameter of 4.0 mm into an expansion cylinder under atmospheric pressure. Thus, expanded particles (first-step expanded particles) were obtained (releasing step). At this time, carbon dioxide was additionally injected into the pressure-resistant closed vessel so that the pressure inside the pressure-resistant closed vessel was not reduced from the expansion pressure during the release of the dispersion slurry, and the internal pressure of the pressure-resistant closed vessel was maintained at 0.9 MPa (gage pressure). The average cell diameter, the high temperature-side melting heat quantity, and the moisture content immediately after expansion of the expanded particles thus obtained were measured. The results are shown in Table 1. The expanded particles thus obtained contained the hydrophilic substance (B) in an amount of 15.0% by weight and the hindered amine (C) in an amount of 5.0% by weight, with respect to 100% by weight as a total amount of the expanded particles.

(Preparation of polypropylene-based in-mold expanded product)

The expanded particles thus obtained were dried for 120 minutes in the dryer at 80°C, so that the moisture content of the expanded particles (this can also be said to be a moisture content after drying with a dryer and a moisture content at the time of molding) was adjusted to 4.0%. After that, the expanded particles were introduced into a pressure-resistant closed vessel. Air was introduced into the pressure-resistant closed vessel, and the expanded particles in the pressure-resistant closed vessel were impregnated with pressurized air, so that an internal-expanded particle pressure (absolute pressure) of 0.15 MPa (absolute pressure) was imparted to the expanded particles. The expanded particles impregnated with air were heat-molded using a molding machine (polypropylene in-mold expansion molding machine manufactured by DAISEN Co., Ltd.) with steam at 0.30 MPa (gage pressure) with a gap in a mold of 10%, so that an in-mold expanded product was obtained. The in-mold expanded product obtained was left at room temperature for 1 hour, then cured and dried at 75°C for 12 hours in a thermostatic chamber, and then left at room temperature for 4 hours again. After that, the density of the obtained in-mold expanded product was measured by the foregoing method, and the surface smoothness and the edge smoothness were evaluated. The results are shown in Table 1.

[Example 7]

Resin particles, expanded particles, and an in-mold expanded product were obtained by methods similar to those of Example 6, except that the gap in the mold at the time of molding the expanded particles was set to 3%. Then, physical properties thereof were measured and evaluated. The results are shown in Table 1.

[Example 8]

Resin particles, expanded particles, and an in-mold expanded product were obtained by methods similar to those of Example 6, except that the expanded particles were not dried (i.e., the moisture content at the time of molding was 21.0%), the expanded particles were not impregnated with air (i.e., no internal pressure was imparted), and the gap in the mold at the time of molding was set to 20%. Then, physical properties thereof were measured and evaluated. The results are shown in Table 1.

[Example 9]

Resin particles and expanded particles were obtained by methods similar to those of Example 6, except that the amount of Kaolin ASP-170 used was changed to 0.12 parts by weight and, in the temperature-increasing and

pressure-increasing step, the temperature inside the pressure-resistant closed vessel was increased by heating to the expansion temperature of 150.7°C. An in-mold expanded product was obtained by heat-molding expanded particles, which had been subjected to a drying treatment, by a method similar to Example 6, except that the expanded particles were dried with a dryer at 75°C for 30 minutes so that the moisture content of the expanded particles (this can also be said to be a moisture content after drying with a dryer and a moisture content at the time of molding) was 4.9%, the expanded particles were not impregnated with air (i.e., no internal pressure was imparted), and the gap in the mold was set to 20%. Physical properties of the resulting expanded particles and the resulting in-mold expanded product were measured and evaluated. The results are shown in Table 1.

[Example 10]

Resin particles and expanded particles were obtained by methods similar to those of Example 6, except that the amount of Kaolin ASP-170 used was changed to 0.10 parts by weight and, in the temperature-increasing and pressure-increasing step, the temperature inside the pressure-resistant closed vessel was increased by heating to the expansion temperature of 150.6°C. An in-mold expanded product was obtained by heat-molding expanded particles, which had been subjected to a drying treatment, by a method similar to Example 6, except that the expanded particles were dried with a dryer at 75°C for 20 minutes so that the moisture content of the expanded particles (this can also be said to be a moisture content after drying with a dryer and a moisture content at the time of molding) was 8.1%, the expanded particles were not impregnated with air (i.e., no internal pressure was imparted), and the gap in the mold was set to 20%. Physical properties of the resulting expanded particles and the resulting in-mold expanded product were measured and evaluated. The results are shown in Table 1.

The weight per particle of the resin particles in Examples 2 through 5 was 1.2 mg (1.2 mg/particle), and the weight per particle of the resin particles in Examples 6 through 10 was 5.0 mg (5.0 mg/particle).

The maintaining time in Examples 2 through 5 was 25 minutes, and the maintaining time in Examples 6 through 10 was 10 minutes.

[Table 1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Resin particles | MI of resin particles | g/10 min | 8.3 | 8.3 | 8.3 | 8.3 | 8.3 | 8.3 | 8.3 | 8.3 | 8.3 | 8.3 |
| | Melting point of resin particles | °C | 141.3 | 141.3 | 141.3 | 141.3 | 141.3 | 141.3 | 141.3 | 141.3 | 141.3 | 141.3 |
| Foaming conditions | Blowing agent | - | $CO_2$ | $CO_2$ | $CO_2$ | $CO_2$ | $CO_2$ | $CO_2$ | $CO_2$ | $CO_2$ | $CO_2$ | $CO_2$ |
| | Foaming temperature | °C | 150.8 | 150.8 | 150.8 | 150.8 | 150.8 | 150.9 | 150.9 | 150.9 | 150.7 | 150.6 |
| | Foaming pressure | MPa | 0.7 | 0.7 | 0.7 | 0.7 | 0.7 | 0.9 | 0.9 | 0.9 | 0.9 | 0.9 |
| Foamed particles | Polypropylene-based resin (A) | % by weight | 79.6 | 79.6 | 79.6 | 79.6 | 79.6 | 79.6 | 79.6 | 79.6 | 79.6 | 79.6 |
| | Hydrophilic substance (B) | % by weight | 15.0 | 15.0 | 15.0 | 15.0 | 15.0 | 15.0 | 15.0 | 15.0 | 15.0 | 15.0 |
| | Hindered amine (C) | % by weight | 5.0 | 5.0 | 5.0 | 5.0 | 5.0 | 5.0 | 5.0 | 5.0 | 5.0 | 5.0 |
| | Other additives | % by weight | 0.4 | 0.4 | 0.4 | 0.4 | 0.4 | 0.4 | 0.4 | 0.4 | 0.4 | 0.4 |
| | Average cell diameter | μm | 351 | 351 | 351 | 351 | 351 | 345 | 345 | 345 | 339 | 357 |
| | High temperature-side melting heat quantity | J/g | 16.4 | 16.4 | 16.4 | 16.4 | 16.4 | 13.8 | 13.8 | 13.8 | 15.6 | 17.1 |
| | Bulk density | g/L | 161.0 | 161.0 | 161.0 | 161.0 | 161.0 | 172.0 | 172.0 | 170.0 | 120.0 | 150.8 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Molding conditions | Moisture content immediately after foaming | % | 56.0 | 56.0 | 56.0 | 56.0 | 56.0 | 21.0 | 21.0 | 21.0 | 18.0 | 15.9 |
| | Moisture content after drying | % | 28.0 | 28.0 | 28.0 | 28.0 | 28.0 | 4.0 | 4.0 | - | 4.9 | 8.1 |
| | Moisture content at the time of molding | % | 28.0 | 28.0 | 28.0 | 28.0 | 28.0 | 4.0 | 4.0 | 21.0 | 4.9 | 8.1 |
| | Internal-foamed particle pressure (absolute pressure) | MPa | 0.16 | 0.16 | 0.16 | - | - | 0.16 | 0.16 | - | - | - |
| | Gap in mold | % | 20 | 20 | 20 | 20 | 20 | 10 | 3 | 20 | 20 | 20 |
| | Steam pressure (gage pressure) | MPa | 0.26 | 0.30 | 0.34 | 0.26 | 0.30 | 0.30 | 0.30 | 0.30 | 0.30 | 0.30 |
| In-mold expanded product | Molded product density | g/L | 165.0 | 170.0 | 167.0 | 191.0 | 186.0 | 187.0 | 161.0 | 243.0 | 152.0 | 185.0 |
| | Surface smoothness | - | 3.5 | 4.0 | 5.0 | 3.5 | 3.5 | 4.5 | 4.5 | 5.0 | 3.0 | 4.0 |
| | Edge smoothness | - | 5 | 5 | 5 | 4 | 4 | 4 | 4 | 4 | 3 | 4 |
| | Flame retardancy (UL94V) | Thickness 13 mm | V-0 | V-0 | V-0 | V-0 | V-0 | V-0 | V-0 | V-0 | V-0 | V-0 |
| | | Thickness 8 mm | V-0 | V-0 | V-0 | V-0 | V-0 | V-0 | V-0 | V-0 | V-0 | V-0 |
| | | Thickness 5 mm | V-0 | V-0 | V-0 | V-0 | V-0 | V-0 | V-0 | V-0 | V-0 | V-0 |

[Comparative Example 1]

An operation similar to that in Example 1 was carried out, except that: before impregnating expanded particles with air (imparting an internal pressure), the expanded particles were dried with a dryer at 80°C for 15 hours, and the moisture content of the expanded particles (this can also be said to be a moisture content after drying with a dryer and a moisture content at the time of molding) was adjusted to 0.7%; and the expanded particles in the pressure-resistant closed vessel were impregnated with pressurized air so that an internal-expanded particle pressure (absolute pressure) of 0.21 MPa (absolute pressure) was imparted to the expanded particles. As a result, resin particles, expanded particles, and an in-mold expanded product were obtained. The physical properties thereof were measured and evaluated. The results are shown in Table 2.

[Comparative Example 2]

An operation similar to that in Example 2 was carried out, except that: before impregnating expanded particles with air (imparting an internal pressure), the expanded particles were dried with a dryer at 80°C for 15 hours, and the moisture content of the expanded particles (a moisture content after drying with a dryer and at the time of molding) was adjusted to 0.7%; and the expanded particles in the pressure-resistant closed vessel were impregnated with pressurized air so that an internal-expanded particle pressure (absolute pressure) of 0.21 MPa (absolute pressure) was imparted to the expanded particles. As a result, resin particles, expanded particles, and an in-mold expanded product were obtained. The physical properties thereof were measured and evaluated. The results are shown in Table 2.

[Comparative Example 3]

An operation similar to that in Example 3 was carried out, except that: before impregnating expanded particles with air (imparting an internal pressure), the expanded particles were dried with a dryer at 80°C for 15 hours, and the moisture content of the expanded particles (a moisture content after drying with a dryer and at the time of molding) was adjusted to 0.7%; and the expanded particles in the pressure-resistant closed vessel were impregnated with pressurized air so that an internal-expanded particle pressure (absolute pressure) of 0.21 MPa (absolute pressure) was imparted to the expanded particles. As a result, resin particles, expanded particles, and an in-mold expanded product were obtained. The physical properties thereof were measured and evaluated. The results are shown in Table 2.

[Comparative Example 4]

An operation similar to that in Example 1 was carried out, except that: expanded particles were dried with a dryer at 80°C for 15 hours, and the expanded particles whose moisture content (moisture content after drying with a dryer and at the time of molding) had been adjusted to 0.7% were heat-molded without being impregnated with air (without imparting an internal pressure (internal-expanded particle pressure) before molding), and thus an in-mold expanded product was obtained. As a result, resin particles, expanded particles, and an in-mold expanded product were obtained. The physical properties thereof were measured and evaluated. The results are shown in Table 2.

[Comparative Example 5]

An operation similar to that in Example 2 was carried out, except that: expanded particles were dried with a dryer at 80°C for 15 hours, and the expanded particles whose moisture content (moisture content after drying with a dryer and at the time of molding) had been adjusted to 0.7% were heat-molded without being impregnated with air (without imparting an internal pressure (internal-expanded particle pressure) before molding), and thus an in-mold expanded product was obtained. As a result, resin particles, expanded particles, and an in-mold expanded product were obtained. The physical properties thereof were measured and evaluated. The results are shown in Table 2.

[Comparative Example 6]

(Preparation of polypropylene-based resin particles)

Components were dry-blended such that, in 100% by weight of a blended product, the polypropylene-based resin (A) (polypropylene (A) alone) accounted for 94.6% by weight, the hindered amine (C) accounted for 5.0% by weight and, as other additives, Talcan Powder PK-S, which is a nucleating agent, accounted for 0.10% by weight, Irgafosl68, which is an antioxidant, accounted for 0.133% by weight, Irganox1010, which is an antioxidant, accounted for 0.067% by weight, and Tinuvin622, which is a UV-ray inhibitor, accounted for 0.10% by weight (where the total amount of these

other additives was 0.4% by weight).

The resulting blended product was introduced into a twin-screw extruder "TEM26SX manufactured by Shibaura Machine Co., Ltd.", and was melted and kneaded at a resin temperature of 220°C. The melted and kneaded polypropylene-based resin composition was extruded in a strand form through a die that was attached to the tip of the extruder and had a circular hole. The extruded polypropylene-based resin composition was cooled with water, and then cut with a cutter so that a weight per particle of resin particles was 1.2 mg, and thus resin particles were obtained (granulation step).

(Preparation of polypropylene-based expanded particles)

Into a pressure-resistant closed vessel, 100 parts by weight of the resin particles thus obtained, 442 parts by weight of pure water, 1.1 parts by weight of tricalcium phosphate as a dispersion agent, 0.22 parts by weight of Kaolin ASP-170 as a dispersion agent, and 0.027 parts by weight of DBS as a dispersion auxiliary agent were introduced. After that, 7.1 parts by weight of carbon dioxide as a blowing agent was introduced into the pressure-resistant closed vessel while the raw materials in the pressure-resistant closed vessel were being stirred, so that a dispersion slurry was prepared (dispersion step). Next, the temperature inside the pressure-resistant closed vessel was increased by heating to an expansion temperature of 151.2°C. Subsequently, carbon dioxide was additionally injected into the pressure-resistant closed vessel, and the pressure in the pressure-resistant closed vessel was raised to an expansion pressure of 2.5 MPa (gage pressure) (temperature-increasing and pressure-increasing step). Next, the inside of the pressure-resistant closed vessel was maintained at the expansion temperature and expansion pressure for 20 minutes (maintaining step), and then a valve provided at the lower part of the closed vessel was opened so that the dispersion slurry was released through an orifice having an opening diameter of 3.6 mm into an expansion cylinder under atmospheric pressure. Thus, expanded particles (first-step expanded particles) were obtained (releasing step). At this time, carbon dioxide was additionally injected into the pressure-resistant closed vessel so that the pressure inside the pressure-resistant closed vessel was not reduced from the expansion pressure during the release of the dispersion slurry, and the internal pressure of the pressure-resistant closed vessel was maintained at 2.5 MPa (gage pressure). The average cell diameter, the high temperature-side melting heat quantity, and the moisture content immediately after expansion of the expanded particles thus obtained were measured. The results are shown in Table 1. The expanded particles thus obtained contained the hindered amine (C) in an amount of 5.0% by weight, with respect to 100% by weight as a total amount of the expanded particles.

(Preparation of polypropylene-based in-mold expanded product)

The expanded particles obtained were dried at 80°C for 15 hours so that the moisture content of the expanded particles was adjusted to 0.3%, and then the expanded particles were heat-molded using a molding machine (polypropylene in-mold expansion molding machine manufactured by DAISEN Co., Ltd.) with steam at 0.30 MPa (gage pressure) and with a gap in a mold of 20% and, without impregnating the expanded particles with air (without imparting an internal pressure). Thus, an in-mold expanded product was obtained. The in-mold expanded product obtained was left at room temperature for 1 hour, then cured and dried at 75°C for 12 hours in a thermostatic chamber, and then left at room temperature for 4 hours again. After that, the density of the obtained in-mold expanded product was measured by the foregoing method, and the surface smoothness and the edge smoothness were evaluated. The results are shown in Table 2.

[Comparative Example 7]

(Preparation of polypropylene-based resin particles)

Components were dry-blended such that, in 100% by weight of a blended product, the polypropylene-based resin (A) (polypropylene (A) alone) accounted for 79.6% by weight, the hydrophilic substance (B) accounted for 15.0% by weight, the hindered amine (C) accounted for 5.0% by weight and, as other additives, Talcan Powder PK-S, which is a nucleating agent, accounted for 0.10% by weight, Irgafosl68, which is an antioxidant, accounted for 0.133% by weight, Irganox1010 accounted for 0.067% by weight, and Tinuvin622, which is a UV-ray inhibitor, accounted for 0.10% by weight (where the total amount of these other additives was 0.4% by weight).

The resulting blended product was introduced into a twin-screw extruder "TEM26SX manufactured by Shibaura Machine Co., Ltd.", and was melted and kneaded at a resin temperature of 220°C. The melted and kneaded polypropylene-based resin composition was extruded in a strand form through a die that was attached to the tip of the extruder and had a circular hole. The extruded polypropylene-based resin composition was cooled with water, and then cut with a cutter so that a weight per particle of resin particles was 5.0 mg, and thus resin particles were obtained (granulation step).

(Preparation of polypropylene-based expanded particles)

Into a pressure-resistant closed vessel, 100 parts by weight of the resin particles thus obtained, 442 parts by weight of pure water, 1.1 parts by weight of tricalcium phosphate as a dispersion agent, 0.15 parts by weight of Kaolin ASP-170 as a dispersion agent, and 0.027 parts by weight of DBS as a dispersion auxiliary agent were introduced. After that, 2.5 parts by weight of carbon dioxide as a blowing agent was introduced into the pressure-resistant closed vessel while the raw materials in the pressure-resistant closed vessel were being stirred, so that a dispersion slurry was prepared (dispersion step). Next, the temperature inside the pressure-resistant closed vessel was increased by heating to an expansion temperature of 150.9°C. Subsequently, carbon dioxide was additionally injected into the pressure-resistant closed vessel, and the pressure in the pressure-resistant closed vessel was raised to an expansion pressure of 0.9 MPa (gage pressure) (temperature-increasing and pressure-increasing step). Next, the inside of the pressure-resistant closed vessel was maintained at the expansion temperature and expansion pressure for 10 minutes (maintaining step), and then a valve provided at the lower part of the closed vessel was opened so that the dispersion slurry was released through an orifice having an opening diameter of 4.0 mm into an expansion cylinder under atmospheric pressure. Thus, expanded particles (first-step expanded particles) were obtained (releasing step). At this time, carbon dioxide was additionally injected into the pressure-resistant closed vessel so that the pressure inside the pressure-resistant closed vessel was not reduced from the expansion pressure during the release of the dispersion slurry, and the internal pressure of the pressure-resistant closed vessel was maintained at 0.9 MPa (gage pressure). The average cell diameter, the high temperature-side melting heat quantity, and the moisture content after expansion of the expanded particles thus obtained were measured. The results are shown in Table 1. The expanded particles thus obtained contained the hydrophilic substance (B) in an amount of 15.0% by weight and the hindered amine (C) in an amount of 5.0% by weight, with respect to 100% by weight as a total amount of the expanded particles.

(Preparation of polypropylene-based in-mold expanded product)

The expanded particles obtained were dried at 80°C for 15 hours so that the moisture content of the expanded particles was adjusted to 0.4%, and then the expanded particles were heat-molded using a molding machine (polypropylene in-mold expansion molding machine manufactured by DAISEN Co., Ltd.) with steam at 0.30 MPa (gage pressure) and with a gap in a mold of 10% and, without impregnating the expanded particles with air (without imparting an internal pressure). Thus, an in-mold expanded product was obtained. The in-mold expanded product obtained was left at room temperature for 1 hour, then cured and dried at 75°C for 12 hours in a thermostatic chamber, and then left at room temperature for 4 hours again. After that, the density of the obtained in-mold expanded product was measured by the foregoing method, and the surface smoothness and the edge smoothness were evaluated. The results are shown in Table 2.

[Comparative Example 8]

Resin particles, expanded particles, and an in-mold expanded product were obtained by methods similar to those of Comparative Example 7, except that the expanded particles having an adjusted moisture content was impregnated with pressurized air to impart an internal-expanded particle pressure (absolute pressure) of 0.13 MPa (absolute pressure). Then, physical properties thereof were measured and evaluated. The results are shown in Table 2.

[Comparative Example 9]

Resin particles, expanded particles, and an in-mold expanded product were obtained by methods similar to those of Comparative Example 7, except that the expanded particles having an adjusted moisture content was impregnated with pressurized air to impart an internal-expanded particle pressure (absolute pressure) of 0.15 MPa (absolute pressure). Then, physical properties thereof were measured and evaluated. The results are shown in Table 2.

[Comparative Example 10]

Resin particles, expanded particles, and an in-mold expanded product were obtained by methods similar to those of Comparative Example 7, except that the gap in the mold at the time of heat-molding the expanded particles was set to 3%. Then, physical properties thereof were measured and evaluated. The results are shown in Table 2.

[Comparative Example 11]

Resin particles, expanded particles, and an in-mold expanded product were obtained by methods similar to

those of Example 9, except that, before impregnating the expanded particles with air (imparting an internal pressure), the expanded particles were dried with a dryer at 80°C for 12 hours to adjust the moisture content of the expanded particles to 0.9%. Then, physical properties thereof were measured and evaluated. The results are shown in Table 2.

The weight per particle of the resin particles in Comparative Examples 1 through 6 was 1.2 mg (1.2 mg/particle), and the weight per particle of the resin particles in Comparative Examples 7 through 11 was 5.0 mg (5.0 mg/particle).

The maintaining time in Comparative Examples 1 through 6 was 25 minutes, and the maintaining time in Comparative Examples 7 through 11 was 10 minutes.

[Table 2]

| | | | Com. Example | Com. Example | Com. Example | Com. Example | Com. Example | Com. Example | Com. Example | Com. Example | Com. Example | Com. Example | Com. Example |
|---|---|---|---|---|---|---|---|---|---|---|---|---|---|
| | | | 1 | 2 | 3 | 4 | 5 | 6 | 7 | 8 | 9 | 10 | 11 |
| Resin particles | MI of resin particles | g/10 min | 8.3 | 8.3 | 8.3 | 8.3 | 8.3 | 7.5 | 8.3 | 8.3 | 8.3 | 8.3 | 8.3 |
| | Melting point of resin particles | °C | 141.3 | 141.3 | 141.3 | 141.3 | 141.3 | 141.3 | 141.3 | 141.3 | 141.3 | 141.3 | 141.3 |
| Foaming conditions | Blowing agent | - | $CO_2$ | $CO_2$ | $CO_2$ | $CO_2$ | $CO_2$ | $CO_2$ | $CO_2$ | $CO_2$ | $CO_2$ | $CO_2$ | $CO_2$ |
| | Foaming temperature | °C | 150.8 | 150.8 | 150.8 | 150.8 | 150.8 | 151.2 | 150.9 | 150.9 | 150.9 | 150.9 | 150.7 |
| | Foaming pressure | MPa | 0.7 | 0.7 | 0.7 | 0.7 | 0.7 | 2.5 | 0.9 | 0.9 | 0.9 | 0.9 | 0.9 |
| Foamed particles | Polypropylene-based resin (A) | % by weight | 79.6 | 79.6 | 79.6 | 79.6 | 79.6 | 94.6 | 79.6 | 79.6 | 79.6 | 79.6 | 79.6 |
| | Hydrophilic substance (B) | % by weight | 15.0 | 15.0 | 15.0 | 15.0 | 15.0 | 0.0 | 15.0 | 15.0 | 15.0 | 15.0 | 15.0 |
| | Hindered amine (C) | % by weight | 5.0 | 5.0 | 5.0 | 5.0 | 5.0 | 5.0 | 5.0 | 5.0 | 5.0 | 5.0 | 5.0 |
| | Other additives | % by weight | 0.4 | 0.4 | 0.4 | 0.4 | 0.4 | 0.4 | 0.4 | 0.4 | 0.4 | 0.4 | 0.4 |
| | Average cell diameter | µm | 351 | 351 | 351 | 351 | 351 | 250 | 345 | 345 | 345 | 345 | 339 |
| | High temperature-side melting heat quantity | J/g | 16.4 | 16.4 | 16.4 | 16.4 | 16.4 | 14.0 | 13.8 | 13.8 | 13.8 | 13.8 | 15.6 |
| | Bulk density | g/L | 127.0 | 127.0 | 127.0 | 127.0 | 127.0 | 129.0 | 170.0 | 170.0 | 170.0 | 170.0 | 120.0 |

(continued)

| | | | Com. Example | Com. Example | Com. Example | Com. Example | Com. Example | Com. Example | Com. Example | Com. Example | Com. Example | Com. Example | Com. Example |
|---|---|---|---|---|---|---|---|---|---|---|---|---|---|
| | | | 1 | 2 | 3 | 4 | 5 | 6 | 7 | 8 | 9 | 10 | 11 |
| Molding conditions | Moisture content immediately after foaming | % | 56.0 | 56.0 | 56.0 | 56.0 | 56.0 | 1.2 | 21.0 | 21.0 | 21.0 | 21.0 | 18.0 |
| | Moisture content after drying | % | 0.7 | 0.7 | 0.7 | 0.7 | 0.7 | 0.3 | 0.4 | 0.4 | 0.4 | 0.4 | 0.9 |
| | Moisture content at the time of molding | % | 0.7 | 0.7 | 0.7 | 0.7 | 0.7 | 0.3 | 0.4 | 0.4 | 0.4 | 0.4 | 0.9 |
| | Internal-foamed particle pressure (absolute pressure) | MPa | 0.21 | 0.21 | 0.21 | - | - | - | - | 0.13 | 0.15 | - | - |
| | Gap in mold | % | 20 | 20 | 20 | 20 | 20 | 20 | 10 | 10 | 10 | 3 | 20 |
| | Steam pressure (gage pressure) | MPa | 0.26 | 0.30 | 0.34 | 0.26 | 0.30 | 0.30 | 0.30 | 0.30 | 0.30 | 0.30 | 0.30 |

(continued)

| | | | Com. Example | Com. Example | Com. Example | Com. Example | Com. Example | Com. Example | Com. Example | Com. Example | Com. Example | Com. Example | Com. Example |
|---|---|---|---|---|---|---|---|---|---|---|---|---|---|
| | | | 1 | 2 | 3 | 4 | 5 | 6 | 7 | 8 | 9 | 10 | 11 |
| In-mold expanded product | Molded product density | g/L | 170.0 | 168.0 | 173.0 | 170.0 | 168.0 | 163.0 | 197.0 | 190.5 | 196.0 | 179.0 | 148.5 |
| | Surface smoothness | - | 2.5 | 3.0 | 3.0 | 1.0 | 1.0 | 1.0 | 2.5 | 2.5 | 2.5 | 2.5 | 1.0 |
| | Edge smoothness | - | 2 | 2 | 2 | 1 | 1 | 1 | 2 | 2 | 2 | 2 | 1 |
| | Flame retardancy (UL94V) | Thickness 13 mm | V-0 | V-0 | V-0 | V-0 | V-0 | NG | V-0 | V-0 | V-0 | V-0 | V-0 |
| | | Thickness 8 mm | V-0 | V-0 | V-0 | V-0 | V-0 | NG | V-0 | V-0 | V-0 | V-0 | V-0 |
| | | Thickness 5 mm | V-0 | V-0 | V-0 | V-0 | V-0 | NG | V-0 | V-0 | V-0 | V-0 | V-0 |

[Main points]

As is evident in Table 1, the in-mold expanded products obtained by molding the expanded particles in Examples 1 through 3, 6, and 7 (to which a low internal pressure (not more than 0.16 MPa (absolute pressure) was imparted) and of Examples 4, 5, and 8 through 10 (to which no internal pressure was imparted) have both good surface smoothness and good edge smoothness. Thus, those in-mold expanded products are each an in-mold expanded product having good surface appearance. In contrast, as is evident in Table 2, the in-mold expanded products obtained by molding the expanded particles in Comparative Examples 1 through 11 have both poor surface smoothness and poor edge smoothness. Thus, those in-mold expanded products are each an in-mold expanded product having poor surface appearance. As described above, it has been shown that, by molding the expanded particles having a moisture content within the range of an embodiment of the present invention after drying with a dryer and/or at the time of molding, it is possible to obtain an in-mold expanded product having good surface appearance, that is, it is possible to provide an in-mold expanded product having excellent surface appearance and productivity, even in a case where no internal pressure is imparted to the expanded particles or the internal pressure imparted to the expanded particles is low.

Industrial Applicability

Performing in-mold expansion molding of the polypropylene-based expanded particles in accordance with an embodiment of the present invention makes it possible to provide a polypropylene-based in-mold expanded product having excellent surface appearance and productivity. The polypropylene-based in-mold expanded product can be suitably used in various applications such as shock-absorbing packing materials, shipping materials, heat insulating materials, civil engineering and construction materials, and automotive components.

## Claims

1. Polypropylene-based expanded particles, wherein:
a moisture content of said polypropylene-based expanded particles is 1.0% to 60.0% after drying with a dryer and/or at the time of molding.

2. The polypropylene-based expanded particles as set forth in claim 1, wherein:
the moisture content is 11.0% to 30.0%.

3. The polypropylene-based expanded particles as set forth in claim 1 or 2, comprising:
a hydrophilic substance (B).

4. The polypropylene-based expanded particles as set forth in claim 3, wherein:
the hydrophilic substance (B) is phosphonate.

5. The polypropylene-based expanded particles as set forth in claim 3 or 4, wherein:
the hydrophilic substance (B) is pentaerythrityl diphosphonate.

6. The polypropylene-based expanded particles as set forth in any one of claims 3 through 5, wherein:
an amount of the hydrophilic substance (B) contained is more than 0.1% by weight and not more than 20.0% by weight, with respect to 100% by weight as a total amount of said polypropylene-based expanded particles.

7. The polypropylene-based expanded particles as set forth in any one of claims 1 through 6, further comprising:
a hindered amine (C).

8. The polypropylene-based expanded particles as set forth in claim 7, wherein:
the hindered amine (C) is a reaction product of 2,4-bis((1-cyclohexyloxy-2,2,6,6-tetramethylpiperidin-4-yl)butylamino)-6-chloro-S-triazine and N,N'-bis(3-amino propyl) ethylenediamine.

9. The polypropylene-based expanded particles as set forth in claim 7 or 8, wherein:
an amount of the hindered amine (C) contained is 1.0% by weight to 10.0% by weight, with respect to 100% by weight as a total amount of said polypropylene-based expanded particles.

10. The polypropylene-based expanded particles as set forth in any one of claims 1 through 9, further comprising:

a polypropylene-based resin (A) in an amount of not less than 70.0% by weight, with respect to 100% by weight as a total amount of said polypropylene-based expanded particles.

**11.** The polypropylene-based expanded particles as set forth in any one of claims 1 through 10, wherein: a bulk density of said polypropylene-based expanded particles is 15.0 g/L to 400.0 g/L.

**12.** A polypropylene-based in-mold expanded product, which is obtained by in-mold expansion molding of polypropylene-based expanded particles recited in any one of claims 1 through 11.

**13.** The polypropylene-based in-mold expanded product as set forth in claim 12, wherein: said polypropylene-based in-mold expanded product satisfies a grade V-0 in a UL94V "vertical burning expanded material test".

**14.** A method for producing a polypropylene-based in-mold expanded product, said method comprising: a step of carrying out in-mold expansion molding of polypropylene-based expanded particles recited in any one of claims 1 through 11.

**15.** The method as set forth in claim 14, comprising:

no step of impregnating the polypropylene-based expanded particles with an inorganic gas; or
a step of impregnating the polypropylene-based expanded particles with an inorganic gas and imparting an internal pressure of more than 0.10 MPa (absolute pressure) and not more than 0.25 MPa (absolute pressure) to the polypropylene-based expanded particles.

## INTERNATIONAL SEARCH REPORT

International application No.
**PCT/JP2022/042353**

**A. CLASSIFICATION OF SUBJECT MATTER**

***C08J 9/18***(2006.01)i
FI: C08J9/18 CES

According to International Patent Classification (IPC) or to both national classification and IPC

**B. FIELDS SEARCHED**

Minimum documentation searched (classification system followed by classification symbols)

C08J9/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-137987 A (KANEKA CORP.) 07 June 2007 (2007-06-07) claims, examples | 1, 10-12, 14 |
| Y | | 7-9, 13 |
| X | JP 2010-100313 A (KANEKA CORP.) 06 May 2010 (2010-05-06) claims, paragraphs [0038]-[0044], [0060], examples | 1, 3, 6, 10-12, 14 |
| Y | | 7-9, 13 |
| X | JP 10-152574 A (KANEGAFUCHI CHEMICAL INDUSTRY CO., LTD.) 09 June 1998 (1998-06-09) claims, paragraphs [0040]-[0055], examples | 1-3, 6, 10-12, 14 |
| Y | | 1-14 |
| X | JP 2000-191860 A (KANEGAFUCHI CHEMICAL INDUSTRY CO., LTD.) 11 July 2000 (2000-07-11) claims, paragraphs [0055]-[0060], examples | 1-3, 6, 10-12, 14-15 |
| Y | | 1-15 |

☑ Further documents are listed in the continuation of Box C.
☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2023** | **17 January 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No. PCT/JP2022/042353

C. DOCUMENTS CONSIDERED TO BE RELEVANT

| Category* | Citation of document, with indication, where appropriate, of the relevant passages | Relevant to claim No. |
|---|---|---|
| Y | WO 2016/052739 A1 (KANEKA BELGIUM N. V.) 07 April 2016 (2016-04-07) claims, paragraphs [0031]-[0060], examples | 1-15 |

Form PCT/ISA/210 (second sheet) (January 2015)

**INTERNATIONAL SEARCH REPORT**
**Information on patent family members**

International application No.
**PCT/JP2022/042353**

| Patent document cited in search report | Publication date (day/month/year) | Patent family member(s) | Publication date (day/month/year) |
|---|---|---|---|
| JP 2007-137987 A | 07 June 2007 | (Family: none) | |
| JP 2010-100313 A | 06 May 2010 | (Family: none) | |
| JP 10-152574 A | 09 June 1998 | (Family: none) | |
| JP 2000-191860 A | 11 July 2000 | US 6214896 B1<br>claims, column 7, line 62 to column 8, line 58, examples | |
| WO 2016/052739 A1 | 07 April 2016 | US 2017/0204240 A1<br>claims, paragraphs [0042]-[0084], examples | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2017169260 A
- FR 1503429
- US 4174343 A
- GB 1515223 A
- EP 0889085 A
- EP 2225318 A
- EP 0309402 A
- US 8598369 B

### Non-patent literature cited in the description

- *CHEMICAL ABSTRACTS,* 191680-81-6